# EUROPEAN PATENT SPECIFICATION

(11) **EP 2 587 771 B1**
(45) Date of publication and mention of the grant of the patent: **12.11.2014**
(21) Application number: 12290120.0
(22) Date of filing: 03.04.2012
(51) Int. Cl.: H04L 29/08, H04W 4/00, H04L 29/06

(54) **Improved handling and configuration of a mobile communications terminal**
Verbesserte Handhabung und Konfiguration eines mobilen Kommunikationsendgeräts
Traitement et configuration améliorés d'un terminal de communication mobile

(30) Priority: 28.10.2011 EP 11290502
(43) Date of publication of application: 01.05.2013
(73) Proprietor: Doro AB, 226 43 Lund (SE)
(72) Inventor: Cammarata, Yves, 75011 Paris (FR)
(74) Representative: Ström & Gulliksson AB

(56) References cited:
- WO-A1-03/063474
- WO-A1-2008/100542
- US-A1- 2008 318 616
- FENG WANG ET AL: "Services and Policies for Care At Home", PERVASIVE HEALTH CONFERENCE AND WORKSHOPS, 2006, IEEE, PI, 1 November 2006 (2006-11-01), pages 1-10, XP031089347, ISBN: 978-1-4244-1085-9

## Description

### TECHNICAL FIELD

This application relates to a method, a mobile communications terminal and a computer-readable storage medium for improved handling and configuration of a mobile communications terminal, and in particular to a method, a mobile communications terminal and a computer-readable storage medium for setting up and configuring a mobile communications terminal in manner that renders the mobile communications terminal easy to handle.

### BACKGROUND

In today's society most mobile devices are computationally powerful devices offering users a wide range of applications and possibilities. However, all these functions and applications can easily become bewildering and confusing to a novice user or for a user who finds new technology challenging. To provide mobile communications terminals that are not confusing many mobile communications terminal models have been produced that offer a limited range of functions wherein advanced functions such as photography, internet browsing etc are not available. Furthermore, those so-called beginner terminals are often simplified by providing a smaller display (which is often monochrome) thereby severely limiting the functionality and versatility of the mobile communications terminal.

However, also technically inapt users benefit highly from using functions requiring advanced technology, such as taking a picture and sharing it with other users, and as the amount of features available often overshadows the basic functions of a mobile device and as the learning curve for a technically inapt user often is quite steep such users may be unable to use their mobile communications terminals properly. The technically inapt user is thus prevented from taking advantage of the possibilities offered by the modem mobile communications terminals such as sharing photographs with other users.

The international patent application WO2008100542 discloses systems and methods are described for remotely managing mobile devices provided by an enterprise. Embodiments are described in which a client is provided to a mobile device whereby the client maintains a list of authorized contacts authorizes connections of the mobile device based on the list. The client responds to commands including commands to delete the list, prevent access to the list and synchronize the list. An administrative function is described for organizing users into groups, each user having access to a mobile device and each group being associated with a list of authorized contacts common to each user in the group.

The international patent application WO03063474 discloses computer display icons include are associated with sequencing designations, and are positioned on a display in a visually recognizable order corresponding to the respective sequencing designations. Sequencing designations can be numeric, alphabetic, or have some other recognizable order. Icons sequenced in this manner can be used to trigger a software application, or operation of a function of a peripheral device. A remote control handset can include a microphone, and can be used as the handset of a telephone or e-phone. The microphone is preferably used in conjunction with software to recognize voice commands, and especially voice intonations of the sequencing designations associated with the icons. A security device reader can be used to limit access to icons, contents of local or distal storage, web sites, and so forth. A preferred embodiment provides an interface layer for applications software that standardizes and simplifies access to functionality using sequenced icons.

The research paper Services and Policies for Care At Home by Feng Wang et al published by the Computing Science and Mathematics department at the University of Stirling, United Kingdom discloses different services that may be offered for an ageing population, including services provided through the Open Services Gateway. The paper also lists challenges in providing such services.

The US patent application US2008318616 discloses a method that may include receiving a call at a portable communication device, entering a first mode when the call is directed to a first device identifier associated with the portable communication device; and entering a second mode when the call is directed to a second device identifier associated with the portable communication device, wherein the first mode provides access to a first set of applications and a first set of user data and the second mode provides a second set of applications and a second set of user data. A user may thus utilize prespecified modes.

There is thus a need for an advanced mobile communications terminal that offers a great range of possibilities and applications but that is easy to use, overview and to learn, that is not confusing to a user and that provides advanced functionality.

### SUMMARY

It is an object of the teachings of this application to overcome the problems listed above by providing a system for two-level user interface for a mobile device wherein the user interface comprises a first user interface and a second user interface, wherein the first interface is implemented on the mobile device and is adapted to only offer a user a set of basic functions (such as voice call, browse images, take images, receive and send messages), but does not allow a user to adjust settings for the mobile device, wherein the second interface is adapted to be executed on a remote device and to allow a second user (or the same user) to also adjust the settings of the mobile device, and wherein the mobile device is configured to receive commands, data and/or settings from the second interface and seamlessly and automatically install such commands, data or settings on the mobile device and thereby possibly affecting also the first user interface.

In the exemplifying description below the first user interface is referred to as simplified user interface and the second interface is referred to as remote user interface.

It is an object of the teachings of this application to overcome the problems listed above by providing a mobile communications terminal comprising a memory and a controller, wherein said memory is configured to store a plurality of applications, files and settings, and wherein said controller is configured to: receive a command originating from a remote user interface through a device communication interface for configuring the mobile communications terminal, provide access to the plurality of applications, files and settings for the command received through the device communication interface, receive a command through a user interface for operating the mobile communications terminal, and provide access to a subset of the plurality of applications, files and settings for the command received through the user interface and preventing access to the remainder of the plurality of applications, files and settings; thereby providing a simplified user interface for the mobile communications terminal that is configurable through a remote user interface.

It is also an object of the teachings of this application to overcome the problems listed above by providing a communications terminal comprising a memory and a controller, wherein said memory is configured to store a plurality of applications, files and settings and/or links to such applications, files and settings, and wherein said controller is configured to: receive a command through a user interface for configuring a mobile communications terminal, update the plurality of applications, files and settings according to the command, and issue a corresponding command and send the corresponding command to the mobile communications terminal for configuring the mobile communications terminal accordingly thereby providing a remote user interface for the mobile communications terminal.

In one embodiment the mobile communications terminal is a mobile telephone. In one embodiment the mobile communications terminal is a tablet computer. In one embodiment the communications terminal is a personal computer. In one embodiment the communications terminal is a smartphone. In one embodiment the communications terminal is a tablet computer. This allows for a remote user to update a mobile phone and/or a tablet computer from a remote terminal through for example a web application.

In one embodiment the system according to the above comprises a mobile communications terminal, such as has been disclosed in the above, and a communications terminal, such as has been disclosed in the above.

This allows for configuring a mobile communications terminal in a manner that renders an advanced mobile communications terminal easy to operate and handle. This is achieved by providing a two-level user interface that offers access to different aspects of a mobile communications terminal, one aspect being operating or using the mobile communications terminal, the other aspect being configuring the mobile communications terminal. The differentiation between the two aspects offers a user interface of the mobile communications terminal that is easy to use, while allowing a full range of functions and applications and possibly for full configuration. This is achieved without enabling remote control of the operation of the mobile communications terminal. One disadvantage of remote control is the additional risk of misuse of the mobile communications terminal and the violation of personal integrity that remote control incurs. Furthermore, as the configuration is performed without remote control of a user interface it is easy to adapt the remote user interface to new models of mobile communications terminals. The remote user interface is also indifferent to the current operating status of a mobile communications terminal. Using remote control requires that the remote user has knowledge of the current status of the mobile communications terminal so that the remote user can issue the correct commands - and in the correct order. The two-level user interface as disclosed herein furthermore does not require that a user refrains from using his mobile communications terminal while a remote operator is controlling the mobile communications terminal. The update of the simplified user interface by the remote user interface as disclosed herein is performed seamlessly and does not interfere with a user's operation of the mobile communications terminal.

Furthermore, as the two-level user interface enables access to shared memory content it is easy to share files between a remote user and a user of the mobile communications terminal.

To provide a limited and simplified user interface that does not allow access to crucial settings and configurations further allows for preventing that a mobile communications terminal is changed involuntarily by a technically inapt user.

In one embodiment the remote user interface is implemented as a web application. This allows for the remote user interface to be easily accessed by a remote user. In one embodiment the mobile communications terminal is arranged to access the remote user interface through such a web application.

It is an object of the teachings of this application to overcome the problems listed above by providing a method for use in a mobile communications terminal which comprises a memory configured to store a plurality of applications, files and settings, said method comprising receiving a command originating from a remote user interface through a device communication interface for configuring the mobile communications terminal, providing access to the plurality of applications, files and settings for the command received through the device communication interface, receiving a command through a user interface for operating the mobile communications terminal, and providing access to a subset of the plurality of applications, files and settings for the command received through the user interface and preventing access to the remainder of the plurality of applications, files and settings, thereby providing a simplified user interface for the mobile communications terminal that is configurable through a remote user interface.

It is also an object of the teachings of this application to overcome the problems listed above by providing a method for use in a mobile communications terminal, said method comprising a memory configured to store a plurality of applications, files and settings and/or links to such applications, files and settings, said method comprising: receiving a command through a user interface for configuring a mobile communications terminal, updating the plurality of applications, files and settings according to the command and issuing a corresponding command and sending the corresponding command to the mobile communications terminal for configuring the mobile communications terminal accordingly thereby providing a remote user interface for the mobile communications terminal.

It is also an object of the teachings of this application to overcome the problems listed above by providing a computer program product possibly stored on a computer-readable medium for implementing any of the methods according to the above.

It is also an object of the teachings of this application to overcome the problems listed above by providing a computer program product possibly stored on a computer-readable medium for implementing one or both of the first and second user interfaces.

It is also an object of the teachings of this application to overcome the problems listed above by providing a computer-readable storage medium encoded with instructions that, when executed on a processor, perform the method according to above.

The inventors of the present invention have realized, after inventive and insightful reasoning, that by dividing the functionality of a device into two separate user interfaces and thereby shielding the more complex and complicated functions of such a device to the user, an easy and intuitive to use interface is achieved that entices a user such as described above to use the device, while still allowing a second user to control the device to take use of the device's full potential.

Such an interface as described above is possibly designed to block access to complex, or crucial settings. This has two advantages. Firstly, it prevents a user with limited knowledge to tamper with and accidentally change settings in the device, and secondly, it shields the user from the actual complexity of the device and thereby does not intimidate or confuse the user.

The simplified user interface refers to a mobile application that aggregates other mobile applications, Uniform Resource Locators (URLs) and widgets developed by a provider and its future updates and improvements. This mobile application is a simplified interface that has been adapted for elderly and disabled people and is remotely configured through a Web interface based on a server application, the remote user interface. Family and other third parties can therefore update or push information and change applications seamlessly and remotely on the mobile device. The remote user interface solution includes services such as remotely configured contact book, picture gallery, Internet bookmarks, podcasts, RSS reader, etc. This list is not to be regarded as being limiting.

The teachings herein find use in mobile communications terminals that are to operate in networks offering a multitude of services and especially for users that are technical novices.

The object of the teachings of this application is achieved by methods according to claims 10, 11, and 15, for which instructions may be stored according to claim 16, by apparatuses according to claims 1 and 14 and by a system according to claim 12.

Other features and advantages of the disclosed embodiments will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF DRAWINGS

The teachings herein will be described in further detail under reference to the accompanying drawings in which:
Figure 1 shows a schematic view of a mobile communications terminal according to one embodiment of the teachings of this application;
Figure 2 shows a schematic view of the general structure of a mobile communications terminal according to one embodiment of the teachings of this application;
Figure 3 is a schematic view of a communications terminal according to the teachings herein;
Figure 4 is a schematic view of the components of a communications terminal according to the teachings herein;
Figure 5 show a schematic view of a telecommunications network according to one embodiment of the teachings of this application;
Figure 6 is a schematic general view of a computer network according to one embodiment of the teachings herein;
Figure 7 is a schematic view of the two-level interface according to one embodiment of the teachings herein;
Figure 8 shows a schematic view of a two-level user interface according to one embodiment of the teachings herein;
Figure 9 shows a time dependency graph for a mobile communications terminal which is arranged to operate with a two-level user interface according to one embodiment of the teachings herein;
Figure 10 is a schematic view showing how the functionality illustrated in figure 9 is handled by a mobile communications terminal according to one embodiment of the teachings herein;
Figure 11 shows a schematic view of the memory access of a mobile communications terminal utilizing a two-level user interface according to one embodiment of the teachings herein;
Figures 12A-C shows a series of example display views of a mobile communications terminal according to one embodiment of the teachings herein;
Figure 13 shows an example display views of a remote user interface on a remote terminal display according to one embodiment of the teachings herein;
Figure 14 shows a flowchart for a method to be executed on a mobile communications terminal according to one embodiment of the teachings herein;
Figure 15 shows a flowchart for a method to be executed on a communications terminal according to one embodiment of the teachings herein; and
Figure 16 shows a schematic view of a computer-readable medium according to one embodiment of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

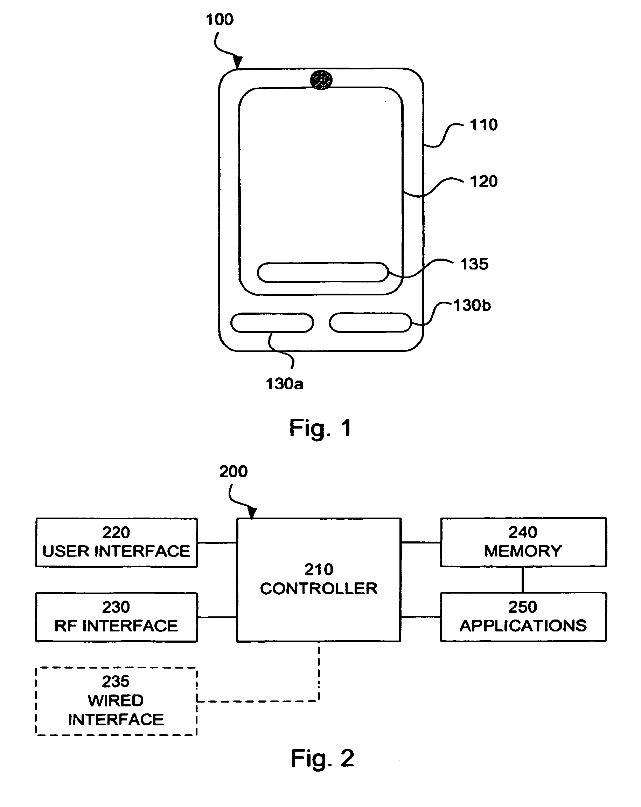

Figure 1 shows a schematic overview of a mobile communications terminal 100 adapted according to the teachings herein. In the embodiment shown the mobile communications terminal is a mobile phone 100. In other embodiments the mobile communications terminal 100 is a personal digital assistant, a media player, a location finding device or any hand-held device capable cf communicating with other devices. The mobile phone 100 comprises a housing 110 in which a display 120 is arranged. In one embodiment the display 120 is a touch display. In other embodiments the display 120 is a non-touch display. Furthermore, the mobile phone 100 comprises two keys 130a, 130b. In this embodiment there are two keys 130, but any number of keys, including none, is possible and depends on the design of the mobile phone 100. In one embodiment the mobile phone 100 is configured to display and operate a virtual key 135 on the touch display 120. It should be noted that the number of virtual keys 135 are dependent on the design of the mobile phone 100 and an application that is executed on the mobile phone 100. In one embodiment the communications terminal 100 comprises an ITU-T keypad or a QWERTY (or equivalent) keypad in addition to or as an alternative to a touch-sensitive display. In an embodiment where the keypad is an alternative to a touch-sensitive display, the display 120 is a non-touch-sensitive display.

Figure 2 shows a schematic view of the general structure of a mobile communications terminal 200 (100) according to figure 1. The mobile communications terminal 200 comprises a controller 210 which is responsible for the overall operation of the mobile communications terminal 200 and is preferably implemented by any commercially available CPU ("Central Processing Unit"), DSP ("Digital Signal Processor") or any other electronic programmable logic device. The controller 210 is implemented using instructions that enable hardware functionality, for example, by using computer program instructions executable in a general-purpose or special-purpose processor that may be stored on a computer readable storage medium (disk, memory etc) 240 to be executed by such a processor. The controller 210 is configured to read instructions from the memory 240 and execute these instructions to control the operation of the mobile communications terminal 100. The memory 240 may be implemented using any commonly known technology for computer-readable memories such as ROM, RAM, SRAM, DRAM, CMOS, FLASH, DDR, EEPROM memory, flash memory, hard drive, optical storage or any combination thereof. The memory 240 is used for various purposes by the controller 210, one of them being for storing application data and various software modules in the mobile terminal. The software modules include a real-time operating system, an application handler as well as various applications 250. The applications 250 are sets of instructions that when executed by the controller 210 control the operation of the mobile communications terminal 100. The applications 250 can include a messaging application for short messaging service (SMS), multimedia messaging service (MMS) and electronic mail, a media player application, as well as various other applications 250, such as applications for voice calling, video calling, web browsing, document reading and/or document editing, an instant messaging application, a phonebook application, a calendar application, a control panel application, one or more video games, a notepad application, location finding applications, et.c.. Furthermore, the mobile communications terminal 200 comprises a Subscriber Identity Module (SIM) reader (not shown) that is capable of reading data from and writing data to a SIM card.

The mobile communications terminal 200 further comprises drivers for a user interface 220, which in the mobile communications terminal 100 of figure 1 is comprised of the display 120, the keys 130, 135, a microphone and a loudspeaker. The user interface (UI) drivers 220 also includes one or more hardware controllers, which together with the UI drivers cooperate with the display 120, keypad 130, as well as various other I/O devices such as microphone, loudspeaker, vibrator, ringtone generator, LED indicator, etc. As is commonly known, the user may operate the mobile terminal through the man-machine interface thus formed.

The mobile communications terminal 200 further comprises a radio frequency interface 230, which is adapted to allow the mobile communications terminal to communicate with other communication terminals in a radio frequency band through the use of different radio frequency technologies. Examples of such technologies are W-CDMA, GSM, UTRAN, LTE and NMT to name a few. The controller 210 is configured to operably execute the applications 250, such as the voice call and message handling applications, through the RF interface 230 and software stored in the memory 240, which software includes various modules, protocol stacks, drivers, etc. to provide communication services (such as transport, network and connectivity) for the RF interface 230, and optionally a Bluetooth interface and/or an IrDA interface for local connectivity. The RF interface 230 comprises an internal or external antenna as well as appropriate radio circuitry for establishing and maintaining a wireless link to a base station. As is well known to a person skilled in the art, the radio circuitry comprises a series of analogue and digital electronic components, together forming a radio receiver and transmitter. These components include, i.e., band pass filters, amplifiers, mixers, local oscillators, low pass filters, AD/DA converters, etc.

In one embodiment the mobile communications terminal 200 further comprises a wired interface 235 (indicated with a dashed line in figure 2 as this is an optional feature), which is adapted to allow the terminal to communicate with other devices through the use of different network technologies. Examples of such technologies are USB (Universal Serial Bus), Ethernet, Local Area Network, and TCP/IP (Transport Control Protocol/Internet Protocol) to name a few.

The RF interface 230 and the wired interface 235 are examples of device communication interfaces that enable communication between the mobile communications terminal 200 and another device.

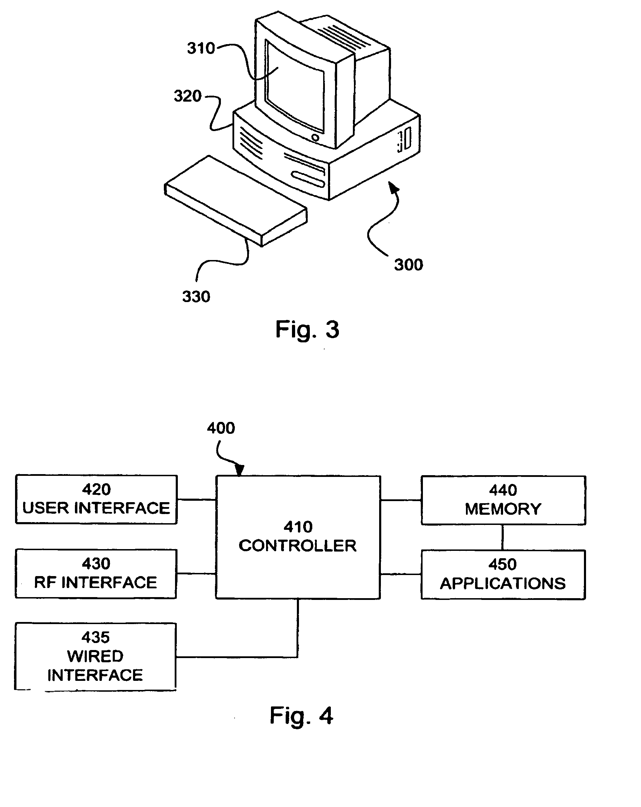

Figure 3 shows a communications apparatus 300 according to an embodiment herein. In one embodiment the communication apparatus 300 is configured for network communication, either wireless or wired. In one embodiment the communication apparatus 300 is configured for network communication, both wireless and wired. Examples of such a communication apparatus 300 are: a personal computer, desktop or laptop computer, an internet tablet computer, a mobile telephone, a smart phone, a personal digital assistant and a work station.

The communication apparatus 300 will hereafter be exemplified and described as being a personal computer 300. The personal computer or terminal 300 comprises a display 310 and a housing 320. The housing comprises a controller or CPU (not shown) and one or more computer-readable storage mediums (not shown), such as storage units and internal memory. Examples of storage units are disk drives or hard drives. The terminal 300 further comprises at least one data port. Data ports can be wired and/or wireless. Examples of data ports are USB (Universal Serial Bus) ports, Ethernet ports or Wi-Fi (according to IEEE standard 802.11) ports. Data ports are configured to enable a terminal 300 to connect with other terminals or a server.

The terminal 300 further comprises at least one input unit such as a keyboard 330. Other examples of input units are computer mouse, touch pads, touch screens or joysticks to name a few.

In an alternative embodiment the communication apparatus 300 is a server.

Figure 4 shows a schematic view of the general structure of a communication apparatus 400 (300) according to figure 3. The communication apparatus is a computer terminal 400 in one embodiment. A computer terminal 400 can be used as a server or a client and also both as a server and a client as would be appreciated by a skilled person. With reference to figure 4 the communication apparatus will be described as being a personal computer or terminal 400, but it should be noted that a server may have the same or similar components. Typically for a server only one user interface is provided for an arrangement of computers or servers. The terminal 400 comprises a controller 410 which is responsible for the overall operation of the terminal 400 and is implemented by any commercially available CPU ("Central Processing Unit"), DSP ("Digital Signal Processor") or any other electronic programmable logic device. The controller 410 is implemented using instructions that enable hardware functionality, for example, by using executable computer program instructions in a general-purpose or special-purpose processor that may be stored on a computer readable storage medium (disk, memory etc) 440 to be executed by such a processor. The controller 410 is configured to read instructions from the memory 440 and execute these instructions to control the operation of the terminal 400. The memory 440 is implemented using any commonly known technology for computer-readable memories such as ROM, RAM, SRAM, DRAM, CMOS, FLASH, DDR, EEPROM memory, flash memory, hard drive, optical storage or any combination thereof. The terminal 400 further comprises one or more applications 450. The applications are sets of instructions that when executed by the controller 410 control the operation of the terminal 400. The memory 440 is used for various purposes by the controller 410, one of them being for storing application data and program instructions 450 for various software modules in the terminal 400. The software modules include a real-time operating system, drivers for a man-machine interface 420, an application handler as well as various applications 450. The applications 450 can include a messaging application such as electronic mail, a browsing application, a media player application, as well as various other applications 450, such as applications for voice calling, video calling, document reading and/or document editing, an instant messaging application, a calendar application, a control panel application, one or more video games, a notepad application, etc.

The terminal 400 further comprises drivers for a user interface 420 which in the terminal 300 of figure of 3, is comprised of the display 310 and the keypad 330. The user interface (UI) drivers 420 also includes one or more hardware controllers, which together with the UI drivers cooperate with the display 310, keypad 330, as well as various other I/O devices such as sound system, LED indicator, etc. As is commonly known, the user may operate the terminal 400 through the man-machine interface thus formed.

The terminal 400 further comprises a radio frequency interface 430, which is adapted to allow the terminal to communicate with other devices through a radio frequency band through the use of different radio frequency technologies. Examples of such technologies are WIFI, Bluetooth®, W-CDMA, GSM, UTRAN, LTE, and NMT to name a few.

The terminal 400 further comprises a wired interface 435, which is adapted to allow the terminal to communicate with other devices through the use of different network technologies. Examples of such technologies are USB, Ethernet, and Local Area Network, TCP/IP (Transport Control Protocol/Internet Protocol) to name a few.

The controller 410 is configured to operably execute applications 450 such as the web browsing or email application through the RF interface 430 and/or the wired interface 435 using software stored in the memory 440 which software includes various modules, protocol stacks, drivers, etc. to provide communication services (such as transport, network and connectivity) for the RF interface 430 and the wired interface 435, and optionally a Bluetooth interface and/or an IrDA interface for local connectivity. The RF interface 430 comprises an internal or external antenna as well as appropriate radio circuitry for establishing and maintaining a wireless link to a base station. As is well known to a person skilled in the art, the radio circuitry comprises a series of analogue and digital electronic components, together forming a radio receiver and transmitter. These components include, i.e., band pass filters, amplifiers, mixers, local oscillators, low pass filters, AD/DA converters, etc. The RF interface 430, the wired interface 435, the Bluetooth interface and the IrDA interface are examples of device communication interfaces that enable communication between the terminal 400 and another device.

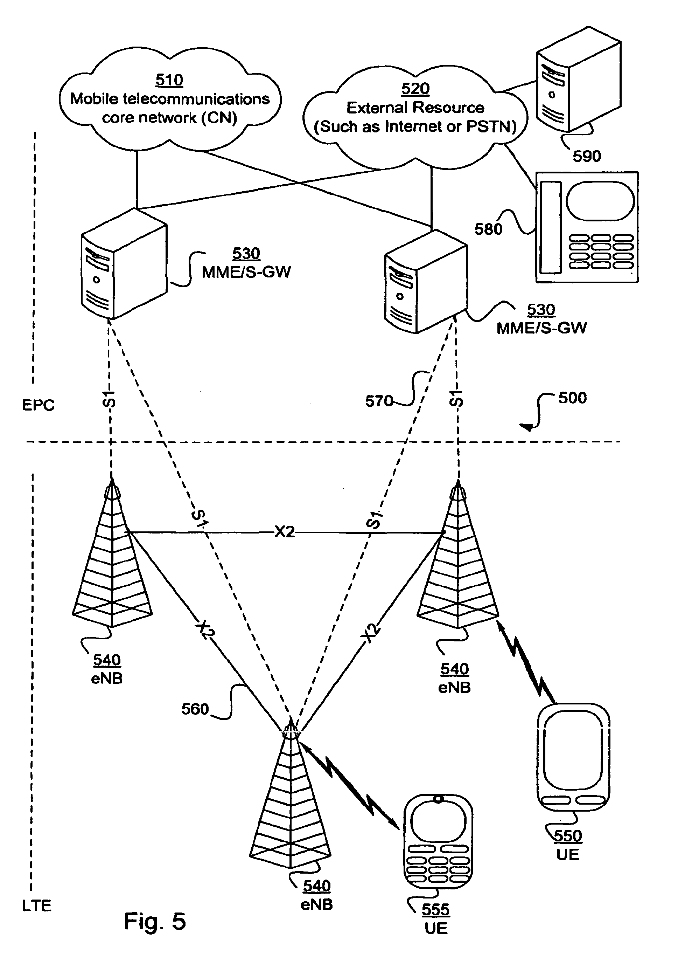

Figure 5 shows a schematic view of the general structure of a telecommunications system 500 according to the teachings herein. In the telecommunication system of figure 5, various telecommunications services such as cellular voice calls, www/wap browsing, cellular video calls, data calls, facsimile transmissions, music transmissions, still image transmissions, video transmissions, electronic message transmissions and electronic commerce may be performed between a mobile terminal 100, 300, 550 according to the disclosed embodiments and other communications terminals, such as another mobile terminal 555 or a stationary telephone 580. The mobile terminals 550, 555 are connected to a mobile telecommunications network 510 through Radio Frequency links via base stations 540.

The telecommunications system 500 comprises at least one server 530. A server 530 has a data storage and a controller that is implemented by any commercially available CPU ("Central Processing Unit"), DSP ("Digital Signal Processor") or any other electronic programmable logic device. In one embodiment such a server is a Mobility Management Entity (MME). In one embodiment such a server is a Gateway (GW). The servers 530 are configured to communicate with a mobile telecommunications core network (CN) 510 and/or an external resource 520 such as the internet or a Public Switched Telephone Network (PSTN). A PSTN 520 is configured to communicate with and establish communication between stationary or portable telephones 580. In one embodiment the external resource comprises or is configured to communicate with an external service provider 590. In one embodiment the servers 530 are configured to communicate with other communicaticns terminals using a packet switched technology or protocol. In such an embodiment the servers 530 may make up an Evolved Packet Core (EPC) layer.

The servers 530 are configured to communicate with nodes, also referred to as base stations 540. In one embodiment the base station 540 is an evolved Node Base (eNB). A base station 540 is further configured to communicate with a server 530. In one embodiment the communication between a server 530 and a base station 540 is effected through a standard or protocol 570. In one embodiment the protocol is S1. A base station 540 is configured to communicate with another base station 540. In one embodiment the communication between a base station 540 and another base station 540 is effected through a standard or protocol 560. In one embodiment the protocol 560 is X2. A base station 540 is further configured to handle or service a cell 580. In one embodiment the at least one base stations 540 make up a Long Term Evolution (LTE) layer. In one embodiment the at least one base stations 540 make up an LTE Advanced layer.

In one embodiment the base station 540 is configured to communicate with a mobile communications terminal 550 (100, 300) through a wireless radio frequency protocol.

In one embodiment the telecommunications system 500 is an Evolved Packet System (EPS) network. In one embodiment the telecommunications system is a system based on the 3GPP (3^{rd} Generation Partnership Project) standard. In one embodiment the telecommunications system is a system based on the UMTS (Universal Mobile Telecommunications System) standard. In one embodiment the telecommunications system is a system based on a telecommunications standard such as GSM, D-AMPS, CDMA2000, FOMA or TD-SCDMA.

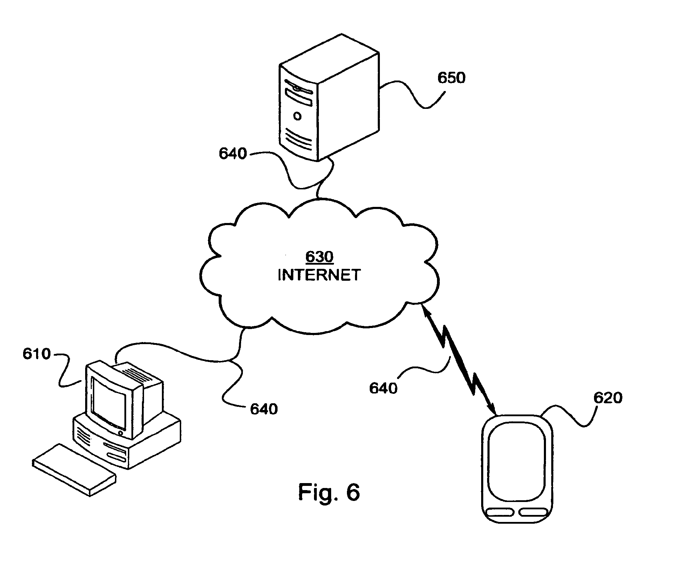

Figure 6 shows a schematic overview of a computer network 500 according to an embodiment herein. A terminal 610, 620, such as the terminals 100, 200, 300, 400 of figures 1, 2, 3 and/or 4 is connected to the internet 630. In figure 6 there are two terminals 610 and 620. The computer network further comprises at least one server 650. The server is in one embodiment a communication apparatus 300, 400 according to figures 3 or 4. In figure 6 only one server 650 is shown, but it should be noted that any number of servers 650 may be implemented in a computer network 600. Generally a server isa physical computer (a hardware system) dedicated to running one or more services (as a host), to serve the needs of users of the other computers or terminals 610, 620 on the network 600. Depending on the computing service that it offers it could be a database server, file server, mail server, print server, web server, or other.

In one embodiment the server 650 is a web server 650. Generally, a web server 650 can refer to either hardware (a computer) or software (a computer application) that helps to deliver content that can be accessed through the Internet 630.

The Internet 630 is a global system of interconnected computer networks that use the standard Internet protocol suite (TCP/IP - Transmission Control protocol/Internet Protocol) to serve billions of users worldwide. It is a network of networks that consists of millions of private, public, academic, business, and government networks, of local to global scope, that are linked by a broad array of electronic, wireless and optical networking technologies. The Internet carries a vast range of information resources and services, such as the inter-linked hypertext documents of the World Wide Web (WWW) and the infrastructure to support communication applications such as email and Voice over Internet Protocol (VoIP) to name a few. The communications infrastructure of the Internet 630 consists of its hardware components; such as servers and terminals and a system of software layers arranged in protocols according to an internet model that control various aspects of the architecture. The most prominent component of the Internet model is the Internet Protocol (IP), which provides addressing systems (IP addresses) for computers on the Internet. In one embodiment the terminals 610, 620 are configured to communicate over the internet through a data channel 640 via a web browser application using a so called WebSocket. WebSocket is a technology providing for bi-directional, full-duplex communications channels, over a single Transmission Control Protocol (TCP) socket. It is designed to be implemented in web browsers and web servers, but it can be used by any client, such as a terminal, or server application. In one embodiment a server 650 is a program or a computer comprising a program that operates as a socket listener.

In one embodiment the computer network 600 and/or the Internet 630 of figure 6 forms part of the External Resources 520 of figure 5. And, in one embodiment, the communications network 500 of figure 5 forms part of the computer network 600 of figure 6. In these embodiments the terminals 610, 620 of figure 6 correspond to terminals 550 and 555 of figure 5.

As would be apparent to a skilled reader, a computer enabled network, such as the Internet, provides many possibilities and variations of how to connect two terminals, and the embodiments disclosed herein are for purely exemplary purposes and should not be construed to be limiting.

In one embodiment a two-level interface is implemented as a simplified shell user interface on a device such as a mobile communications terminal 100 and a second interface that is a remote user interface. The remote interface is implemented as a web application that can be executed on any web browser. The details of such a configuration will be disclosed below.

The simplified user interface provides a user with direct control of a selection of functions and applications. The selection of applications and functions is a subset of the applications and functions that are available on the mobile communications terminal 100. The simplified user interface is further configured to prevent a user from accessing any applications, functions, settings or configurations that is stored on the mobile communications terminal 100 and have not been selected to be available. The selection can be made by a remote user and/or be preset in a production or update process for the mobile communications terminal. This allows for a highly simplified user interface that is easy to overview and handle. This also provides for ensuring that the simplified user interface for the mobile communications terminal is not changed accidentally, possibly rendering it unable to be used or at least difficult to use.

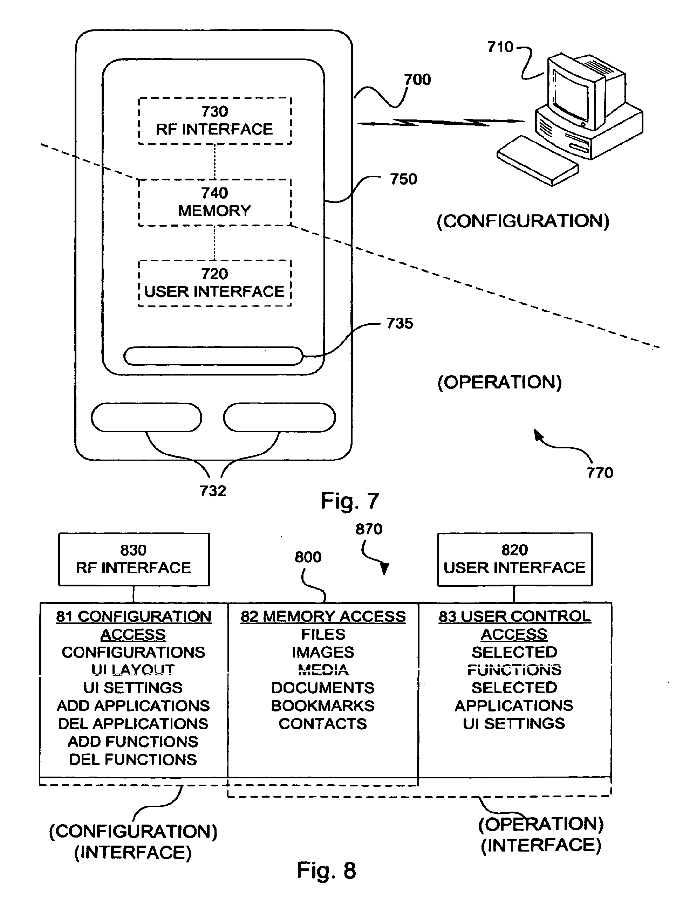

Figure 7 is a schematic view of the two-level interface 770 being employed on a mobile communications terminal 700 and a personal computer 710 and the interrelationship between the mobile communications terminal 700 and the personal computer 710. The mobile communications terminal 700 is a mobile smartphone 100, 200 as disclosed with reference to figures 1 and 2. The personal computer 710 is a personal computer 300, 400 as disclosed with reference to figures 3 and 4. As in indicated with the zagged arrow in figure 7 the mobile communications terminal 700 and the personal computer 710 are configured to communicate with each other. The communication is achieved through a network (not shown in figure 7, but taken to be implicit in the communication), such as the network disclosed in either or both of figures 5 and 6. The mobile communications terminal 700 is arranged to communicate with the personal computer 710 through the RF interface 730 of the mobile communications terminal 700.

The personal computer 710 is able to access the memory 740 of mobile communications terminal 700 through a controller (referenced with 210 in figure 2, not shown in figure 7). As has been disclosed with reference to figure 2 the memory 740, 240 comprises applications, configurations and settings for the mobile communications terminal 700. The memory access is implemented by the controller that is configured to receive various commands and data from the personal computer 710 and in response thereto access the memory according to the commands and data received. The personal computer 710 is thereby able to store or update settings stored in the memory 740.

A user is able to access the memory through the user interface 720, possibly through one or several buttons 732 (referenced 130 in figure 1), one (or several) virtual button(s) 735 or generally through a touch-sensitive display 750. The memory access is implemented by the controller that is configured to receive various user commands through the user interface 720 and in response thereto access the memory according to the commands received. The user is thereby able to operate applications that are stored in the memory 740.

The two-level user interface 770 is divided into two levels, a simplified user interface, that allows for user control for operating the mobile communications terminal 700, and a remote user interface, that allows for configuration of the mobile communications terminal 700. In figure 7 this is indicated by the diagonal dashed line that illustrates the division of the two levels and that they have a shared access to the memory 740 of the mobile communications terminal 700. It should be noted that the remote user interface is not as such stored or implemented on the remote terminal 710. It is merely accessed by the remote terminal 710. The remote user interface is stored on a server, such as the server 650 of the network illustrated in figure 6, and partially on the mobile communications terminal 700. Of course, the remote terminal 710 may be acting as the server (650). In such an embodiment the remote user may be an operator.

Figure 8 shows a schematic view of a two-level user interface 870 according to the teachings herein. A configuration access 81 is provided through an RF interface 830. The configuration access allows for changing configurations, adding and deleting applications and functions, changing the user interface and the layout thereby controlling the general configuration of a mobile communications terminal and its user interface.

A user control access 83 is provided through a user interface 820. The user control access allows for operating the mobile communications terminal 800 by accessing and executing applications and functions. And, also for changing certain UI settings, such as for example changing the volume level. The UI settings that are possible to change through the user control access 83 only relate to minor and specific functions of the UI and not to any general functionality or layout of the UI. A memory access 82 is provided through a controller (not shown) that allows for accessing memory content such as files, images, media, documents, bookmarks, contact etc. This allows for maintaining the available files etc synchronized between the simplified user interface and the remote user interface. The simplified user interface enables user control through an operation interface as is indicated in figure 8 and the remote user interface enables a configuration interface as is also indicated in figure 8.

In one embodiment the two-level interface is configured to maintain both the first (simplified) and the second (remote) interface synchronized so that a change in one user interface is reflected automatically in the other user interface by configuring a controller to maintain the two user interfaces synchronized. For example, if a remote user adds a picture file to the shared memory, the picture file is transferred to the memory of the mobile communications terminal 800 and stored through the memory access portion 82.

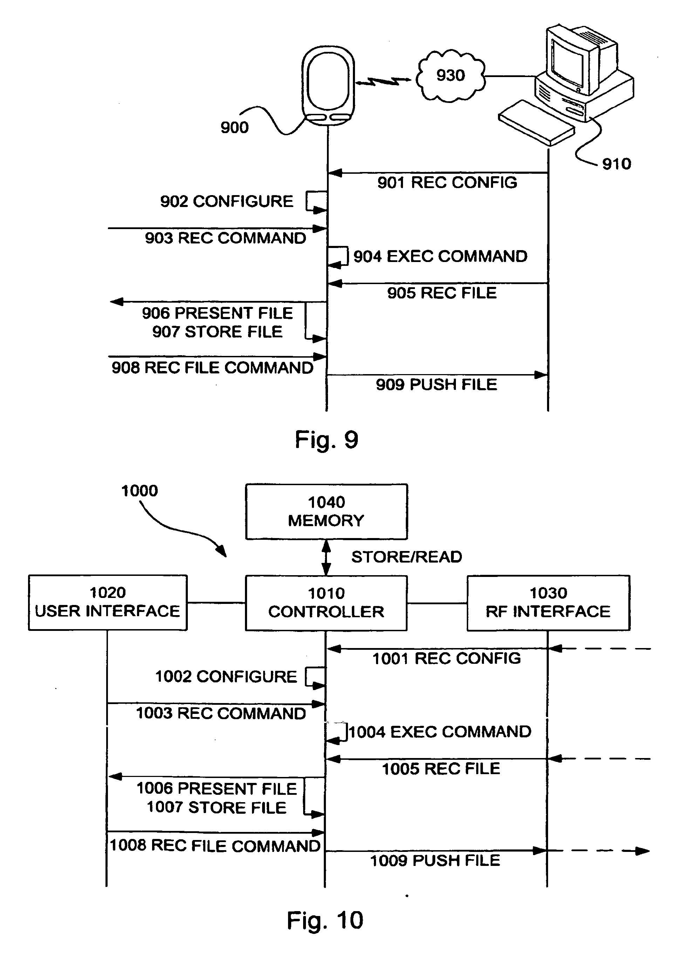

Figure 9 shows a time dependency graph for a mobile communications terminal 900 which is arranged to operate with a two-level user interface as has been described with reference to figures 7 and 8 according to one embodiment of the teachings herein. The mobile communications terminal 900 is connected, through an Internet connection 930, to a remote device, such as a personal computer 910, which is arranged to execute a remote user interface, such as the configuration interface of figures 7 and 8. The mobile communications terminal 900 is further configured to receive commands and to present data through a simplified user interface (not shown in figure 9, but referenced as OPERATION in figure 7 and OPERATION INTERFACE in figure 8). The personal computer 910 issues a configuration command that has been received through the remote user interface. The configuration command can relate to a general configuration of the mobile communications terminal such as MMS (Multi Media Service) settings, user interface layout, selection of applications and/or functions and possibly updating contact list (not shown in figure 9) of the mobile communications terminal 900. The mobile communications terminal 900 receives 901 the configuration command and configures 902 the mobile communications terminal 900 accordingly, possibly by updating settings and/or other configurations stored in a memory (not shown in figure 9, but referenced with 240 in figure 2) of the mobile communications terminal 900. A remote user is thus able to change the configuration of the mobile communications terminal 900 through the remote user interface. The mobile communications terminal 900 further receives 903 a command from a user through a simplified user interface (not shown in figure 9). The command can relate to executing a function or an application. A function can for example be to place a call, take a picture or send a message. An application can for example be a location finding application utilizing a GPS (global positioning system) device, a media browsing application or a web browsing application. The controller executes 904 the command accordingly. This allows a user to gain direct control of the mobile communications terminal 900 and the available functions and applications to operate the mobile communications terminal 900. The available functions and applications are the functions and applications that have been selected as indicated in and described for figure 8 (see user control access 83).

Using such a two-level user interface allows for pushing of data also from the first user interface, the simplified user interface, to the second user interface, the remote user interface. For example if a user takes a picture with a camera comprised in the mobile communications terminal the picture is also pushed to the second user interface. In addition, if a second or remote user stores a picture through the second user interface the picture is pushed to the device where the first user interface can display the picture to the user.

In figure 9 this is illustrated by the mobile communications terminal 900 receiving 905 a file from the personal computer 910. In this example the file is an image and the controller responds by presenting 906 the image file to the user, for example by displaying it on a display (not shown). The image file is also stored 907 by the mobile communications terminal 900. The image library of the mobile communications terminal 900 is thereby kept up to date and synchronized with an image library of the remote user interface.

In one embodiment the mobile communications terminal 900 is configured to present the file to the user by displaying a notification informing the user that the file has been received, possibly offering the user an opportunity to open the file. This informs the user of the actions taken by the mobile communications terminal 900 and the user is thus made aware that the mobile communications terminal 900 has received a file, such as a picture, and offered a choice of whether to view it or not.

In one embodiment the mobile communications terminal 900 is configured to store the file in a library of similar files. In one such embodiment, where the file is a media file this allows a remote user to update a user's gallery which allows for sharing of media files, such as pictures between the remote user and the user of the mobile communications terminal 900.

In one embodiment, where the file is a picture file, the mobile communications terminal 900 is configured to present the file by setting it to be a background image of user interface layout of the mobile communications terminal 900. This allows a remote user to configure the user interface layout of the mobile communications terminal 900 by changing the background image.

In on example a user takes a picture with a built-in camera. The user operates the camera through the simplified user interface and the camera captures and stores a picture in the mobile communications terminal. The user has thus issued a command relating to a file (the picture file) and the command is received 908 by the mobile communications terminal 900 through the simplified user interface. The mobile communications terminal 900 pushes 909 the image file to the remote user interface being accessed via the personal computer 910.

Figure 10 shows how the functionality illustrated in figure 9 is handled by the components of the mobile communications terminal 900, 1000. A controller 1010 is configured to receive 1001 a configuration command through an RF interface 1030 that, in turn, receives the configuration from a remote terminal (not shown, but indicated with a dashed line). The controller 1010 configures 1002 the mobile communications terminal 1000 by storing the configuration in a memory 1040. The controller 1010 is further configured to receive 1003 a command through a user interface 1020, the command originating from a user (not shown), and to execute 1004 the command accordingly.

The controller 1010 is further configured to receive 1005 a file, such as a media file, and in response thereto present 1006 the file through the user interface 1020 and to store 1007 the file in the memory 1040. This allows for a remote user to push a file such as a media file to the mobile communications terminal 1000 and thereby allow the user to take part of the file's content, such as view an image. It also allows for a remote user to keep a file library, such as an image gallery, of the mobile communications terminal 900 updated and possibly synchronized with an image gallery of the remote user interface.

The controller 1010 is further configured to receive 1008 a command relating to a file through the user interface 1020. The command is for example a command to take a picture. The controller is configured to execute the command in response thereto and in this example to take a picture, store a resulting image file in the memory 1040 and to push 1009 the image file through the RF interface 1030 to the remote user interface. The image file is thereafter available also through the remote user interface.

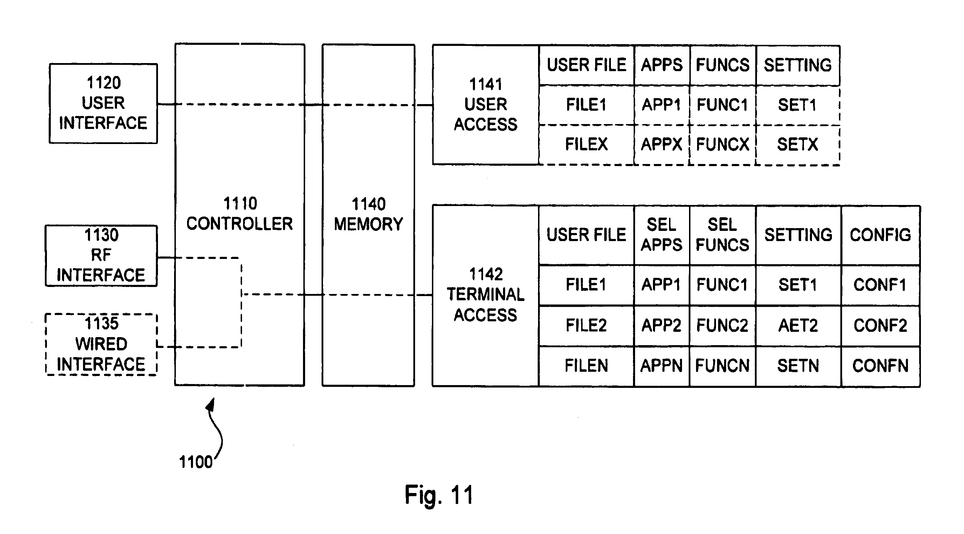

Figure 11 shows a schematic view of the memory access of a mobile communications terminal 1100 utilizing a two-level user interface as has been disclosed with reference to figures 7 and 8 according to one embodiment of the teachings herein.

A terminal access 1142 is provided through a memory 1140. In one embodiment the terminal access 1142 is implemented as a logical partition with links to content in the memory 1140. In one embodiment the terminal access 1142 is implemented as full access to the memory 1140. A controller 1110 is configured to enable access to the terminal access 1142 of the memory 1140 for commands received through an RF interface 1130 originating from the remote user interface of the two-level user interface.

The terminal access 1142 of the memory 1140 enables access to a collection of user files (FILE1..FILEN). The files may relate to images, contacts, documents, etc as has been described above. The terminal access 1142 of the memory 1140 also enables access to select applications (APP1..APPN). The applications are selected to be available through the simplified user interface of the two-level user interface. The applications can relate to messaging, internet browsing, location finding, games and media players to name a few examples. The terminal access 1142 of the memory 1140 also enables access to select functions (FUNC1..FUNCN). The functions are selected to be available through the simplified user interface of the two-level user interface. The functions may relate to using an application, placing a call, utilizing a built-in or attached device such as taking a picture with a built-in camera to name a few examples. The terminal access 1142 of the memory 1140 also enables access to adjust settings (SET1..SETN) and configurations (CONF 1..CONFN). This allows the remote user interface to change the general look and feel, that is, the user interface and functionality, of the mobile communications terminal 1100. For example the remote user interface can change settings for MMS, internet access (possibly through GPRS (General Packet radio Switching)). The remote user interface can also change settings for the general UI layout changing the placement of virtual buttons and the functionality of such buttons. This enables the customization of the mobile communications terminal 1100 according to a user's special technical knowledge level and desires to use the mobile communications terminal 1100. Such customization may be performed with respect to for example, virtual buttons placement, size, colors and which virtual buttons to show in what instance of operation. The customization may also relate to enable voice input and voice output, for example through the use of text to speech technology. The terminal access 1142 does not allow access to operate a function or an application of the mobile communications terminal 1100. The remote user is thereby prevented from operating the mobile communications terminal 1100.

A user access 1141 is provided through the memory 1140. In one embodiment the user access 1141 is implemented as a logical partition with links to content in the memory 1140. The controller 1110 is configured to enable access to the user access 1141 of the memory 1140 for commands received through a user interface 1120 for operating the mobile communications terminal 1100.

The user access 1141 of the memory 1140 enables access to a collection of user files (FILE1..FILEX). The files may relate to images, contacts, documents, etc as has been described above. The user files (FILE 1..FILEX) accessible through the user access 1141 make up a subset of the user files (FILE1..FILEN) that are available through the terminal access 1142. The user access 1141 of the memory 1140 also enables access to selected applications (APP 1..APPX). The selected applications make up a subset of the applications (APP1..APPN) that are available through the terminal access 1142. Through the user access 1141 access to the functionality of an application is enabled so that a user may operate and use an application. The user access 1141 of the memory 1140 also enables access to selected functions (FUNC1..FUNCX). The selected applications make up a subset of the functions (FUNC1.. FUNCN) that are available through the terminal access 1142. Through the user access 1141 access to the functionality of a function is enabled so that a user may operate and use the function. The user access 1141 of the memory 1140 also enables access to adjust settings (SET1..SETX). The settings available through the user access 1141 constitute a subset of the settings (SET1..SETN) available through terminal access 1142 and are directed at making smaller adjustments of the mobile communications terminal 1100, such as ringing tone volume level for example. This enables a user to make smaller adjustments to a mobile communications terminal 1100 without being able to change its overall general operation. In one embodiment the user access is configured to not allow access to any settings. This further ensures that no changes can be made to the mobile communications terminal 1100 through the simplified user interface. In figure 11 it is indicated with dashed boxes that the user access 1141 is not comprised of actual data objects, but only provides access to such data objects. This allows for applying the two-level user interface to be utilized in a mobile communications terminal 1100 without undue consumption of memory resources.

It should be noted that a clear distinction is made between the user access 1141 and the terminal access 1142 and the mobile communications terminal 1100 is configured to prevent the user interface 1120 to gain access to other data and functionality than what is comprised in the user access 1141. This enables the mobile communications terminal 1100 to maintain a stable user interface that is simple to handle and overview thereby preventing that a user accidentally changes the simplified user interface. Such a change could potentially render the mobile communications terminal 1100 useless to a technical novice. However, a user may access the hidden features and settings on a device by launching the remote user interface through a web browser on the mobile communications terminal 100. In one embodiment the mobile communications terminal 1100 is configured to prevent that a file or other data is deleted through the user access 1141. This ensures that no data is deleted accidentally through the simplified user interface.

In one embodiment the remote user interface is implemented as a web application. This enables a remote user to access the remote user interface from any (internet capable) terminal which ensures that configuration of a simplified user interface on a mobile communications terminal is easy to perform and does not require special hardware. This also allows for easy backup of data storage.

In one embodiment the remote user interface is implemented as a stand-alone application on a second terminal. This further safe-guards against unwarranted use and/or misuse of the remote user interface as access to the special hardware is required to access the remote user interface.

In one embodiment the mobile communications terminal is configured communicate with the remote terminal through a RF connection, such as has been described above. In one embodiment the mobile communications terminal is configured communicate with the remote terminal through an internet connection. And, in one embodiment the mobile communications terminal is configured communicate with the remote terminal through a wired interface (235, 435). In such a connection the mobile communications terminal is connected to the remote terminal through, for example, a USB cable, and data and commands are transferred between the two terminals through the cable.

In the following a specific example of an embodiment will be given. It should be noted that this specific example is but one manner of implementing the teachings of this application and only serves to illustrate the teachings given herein.

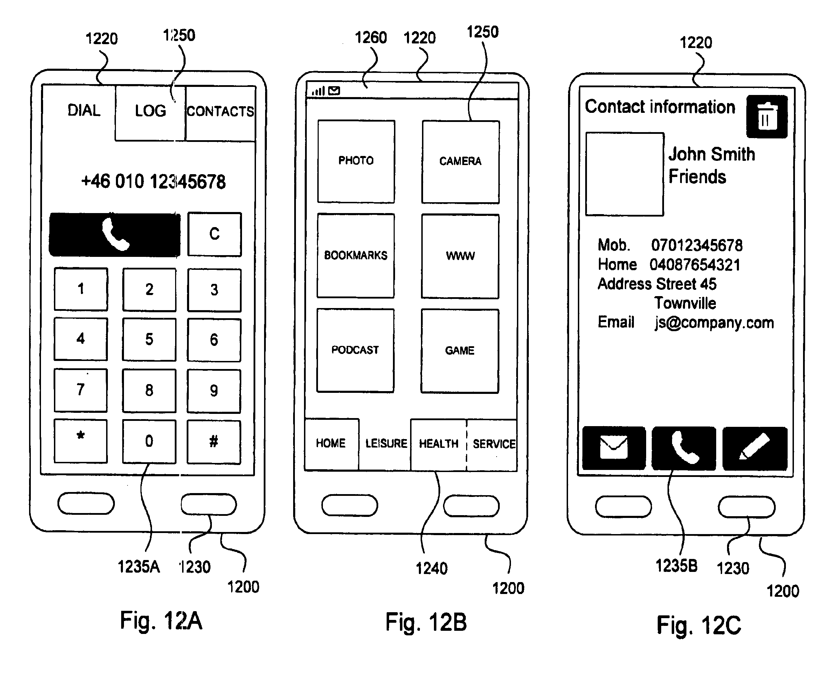

Figure 12 shows a series of example display views of a mobile communications terminal 1200 according to one embodiment. Figure 12B shows an example of a display view being displayed on a display 1220. In this example view a group of available applications, represented by icons 1250, is being displayed. The display view also comprise tabs 1240 indicating a filtering or sorting of the application group. In this example the applications are sorted into groups related to HOME (such as basic mobile communications terminal functionality applications), LEISURE, HEALTH and SERVICE. By selecting one of the tabs a user is allowed access to different applications. The remote user interface provides a possibility to configure the tabs and which applications that are associated with each tab. The position that the tabs are to be displayed at on a display can also be configured through the remote user interface allowing a remote user to configure the user interface design of the mobile communications terminal. Also displayed is a status bar 1260 showing the status of the mobile communications terminal 1200.

A user is thereby allowed access through the simplified user interface to applications stored in the mobile communications terminal 1200 and is provided with a general overview of the mobile communications terminal 1200.

Figure 12A shows another example of a display view being displayed on a display 1220. In this example view a display view for a telephone application is being displayed. The telephone application display view comprises a plurality of virtual keys 1235A for input of telephone numbers and for executing a telephone call. The telephone application display view comprises three tabs 1250 for accessing various aspects of the telephone application. In this example embodiment the aspects are: a dialling function, through which a user can input a telephone number and execute a call to that number; a logging function, through which a user can view the call log of the mobile communications terminal 1200; and a phonebook function, through which a user can access and view the contacts stored on the mobile communications terminal 1200. As for the tabs of figure 12B the number of tabs, their position and the associated aspects are configurable through the remote user interface allowing a remote user to configure the user interface design of the mobile communications terminal.

A user is thereby offered access through the simplified user interface to an application and allowed to directly control or operate the application (and various aspects associated with the application) and thereby control the operation of the mobile communications terminal 1200.

Figure 12C shows another example of a display view being displayed on a display 1220. In this example a display view for a phonebook application is being displayed. In this example the contact data for a contact (John Smith) is being displayed along with virtual buttons 1235B for executing functions associated with the contact data. In this example four buttons are shown and their associated functionalities are Send message, Initiate a voice call (or video call), Edit contact data and Trash (or delete) contact data. The remote user interface provides a possibility for a remote user to configure what data is to be displayed, which buttons 1235B to display and which functions the buttons (1235B and/or 1230) should be associated with.

A user is thereby allowed access through the simplified user interface to data stored in the mobile communications terminal 1200 and provided with an opportunity to perform actions based on the data ad thereby operate the mobile communications terminal 1200.

A mobile communications terminal 1200 is thus enabled to provide a user with a user access to selected applications and data and opportunity to control the operation of the mobile communications terminal 1200. For example, the remote user may configure the mobile communications terminal 1200 to not display a button associated with deleting a contact which ensures that no contacts are deleted accidentally by the user.

The display views are designed to present data in an easy to overview manner so as not to be confusing. The display views are further designed to present and thereby offer access to only a subset of the available functionality of the mobile communications terminal by only displaying the subset consisting of selected applications and data. This ensures that a user is not confused by a plethora of available options and applications. It also prevents a user from making crucial changes involuntarily.

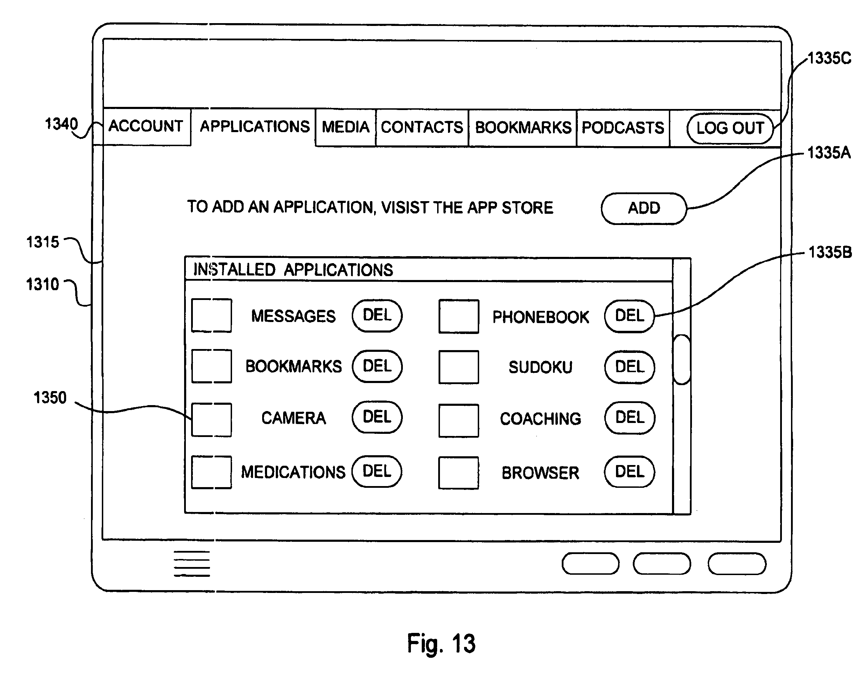

Figure 13 shows an example display view of a remote user interface on a remote terminal display 1310 according to an embodiment. In this example the remote user interface is implemented as an internet accessible application. To access the remote user interface a user can thus log on through an internet browser from any internet capable communications terminal such as the terminal 300, 400 described with reference to figures 3 and 4. A display view is being displayed on the display 1310. The display view comprises a user interface window 1315 which provides a remote user with a remote user interface. The user interface window 1315 comprises a plurality of aspect tabs 1340. Each aspect tab is associated with one aspect of the remote user interface. In the example of figure 13 the aspect and associated tabs displayed are: ACCOUNT, through which a remote user can change settings for an associated mobile communications terminal's account, such settings may include services such as MMS for example; APPLICATIONS, through which a remote user can select applications by adding or deleting applications from a list of applications 1350 to be installed on the mobile communications terminal; MEDIA, through which a remote user can access media, such as pictures, stored for the mobile communications terminal; CONTACTS, through which a remote user can handle (add, delete, edit) contacts for the mobile communications terminal; BOOKMARKS, through which a remote user can handle bookmarks for the mobile communications terminal; and SETUP, through which a remote user can change the setup of the mobile communications terminal. In one embodiment the settings relate to configuration of communication services, application settings, user interface settings and general settings to name a few. In one embodiment the settings relate to the layout and design of the user interface.

In the example of figure 13 the remote user interface application window 1315 displays a list of currently installed applications 1350 for the mobile communications terminal. A remote user may select that a new application should be installed in the simplified user interface by activating the virtual button 1335A. In one embodiment the applications are fetched from the applications that are stored on the mobile communications terminal, but which have not yet been made available through the simplified user interface. In one embodiment the applications are selected from an application store. In one embodiment the applications to be selected are fetched from the applications that are stored on the mobile communications terminal, but which have not yet been made available, and from the applications that are stored on the mobile communications terminal. A remote user may also deselect an application by activating a virtual button 1335B.

The application view further comprises a virtual button 1335C for logging out of the remote user interface. In one embodiment the remote user interface application is arranged to synchronize with the simplified user interface of the mobile communications terminal as a remote user makes a change through the remote user interface. This ensures that the two user interfaces are properly synchronized at all times. In one embodiment the remote user interface application is arranged to synchronize with the simplified user interface of the mobile communications terminal as a remote user logs out of the remote user interface application. This only requires that a connection between the remote user interface and the simplified user interface is established and data sent when the remote user logs out of the remote user interface application which saves network resources. It should be noted that synchronizations can be effected also at other times or events, for example when expressly required by the remote user and/or the user of the mobile communications terminal 1200.

A remote user is thereby provided with capabilities to change a mobile communications terminal's configuration and setup, especially with regards to available applications.

The remote user interface can be configured for a remote user, such as a relative or friend. It can also be configured for a remote user being a network operator. In these two (and other) configurations the remote user is offered different opportunities for configuring the simplified user interface. Examples of opportunities presented to a relative are: add or delete contacts in order for the user to always have an updated contact list; add or delete photos of grandchildren or from the latest vacation to make the user feel socially included, and add or delete bookmarks of interesting sites for the user. Examples of opportunities offered to an operator are: add or delete applications to the list of applications that are available for selection and/or to select an application, follow statistics and monitor and administrate the remote user interface for a second remote user.

Figures 12 and 13 show an example of a two-level user interface having a simplified user interface (figures 12A-C) and a remote user interface (figure 13) that provides a user interface for a mobile communications terminal that is simple and easy to handle and overview, but which can be configured in any manner to be adapted to a specific user's needs and desires.

A two-level user interface as disclosed herein provides an easy way to create dedicated services based on the paradigm that a service is based on multiple universes (user interface desktops). A background and an icon characterize each universe. On each universe, applications (for example Android™ applications), links, widgets, title/status bar, bottom bar can be disposed. Universes can display any combination of application icons (for both generic and/or specific applications), full-featured embedded applications, links to different kind of data (web pages, phone numbers, images to name a few) and widgets, with an optional title/status bar. The layout of each universe can be customised and updated on the server-side with regards to applications life cycle management, user or group specific installation, deletion and update, according to terminal capabilities; local and remote generic data storage mechanism; XMPP (Extensible Messaging and Presence Protocol) push mechanism (server to mobile); network provider-specific applications provide a server user interface allowing data inputs from the user or friends (push mechanism allowing seamless synchronisation between mobile and server data); the server side provides a service manager interface allowing dynamic services updates (new software, new users, new universe layout); display connected users, statistics on user actions; and send messages to connected user (or group of users). The remote user interface is arranged to specify and/or change such a universe thereby configuring the general layout of the user interface for the mobile communications terminal.

The following applications may be implemented based on this architecture: unified messaging application, contact application, podcast application, bookmarks application, document sharing, instant messaging application, photo sharing application, calendar application, weather widget application, and/or RSS (Resource description framework Site Summary, also referred to as syndication) feed application.

In one embodiment the remote user interface is implemented as 3-tier architecture having a presentation layer, a processing layer and data access layer. The presentation layer consists of two major parts: the user interface (application window 1315) and the mobile interface part for communicating with the mobile communications terminal. The processing layer consists of a remote user interface engine. The engine provides the following example services: management of services and settings; user management; management of remote devices; administration modules and identification; and managing the applications (download, update, delete) running on the mobile communications terminal to name a few. Lastly, the data access layer is implemented for example via Corba services and provides access to data shared with the mobile communications terminal. The data access is composed of remote user interface services such as Corba Service Core and Logging Service (event logging function).

More details on how the two-level user interface according to the teachings of this application can be implemented is to be found in the European patent application EP 11290502.1 entitled "TWO LEVEL USER INTERFACE" from which this application claims priority.

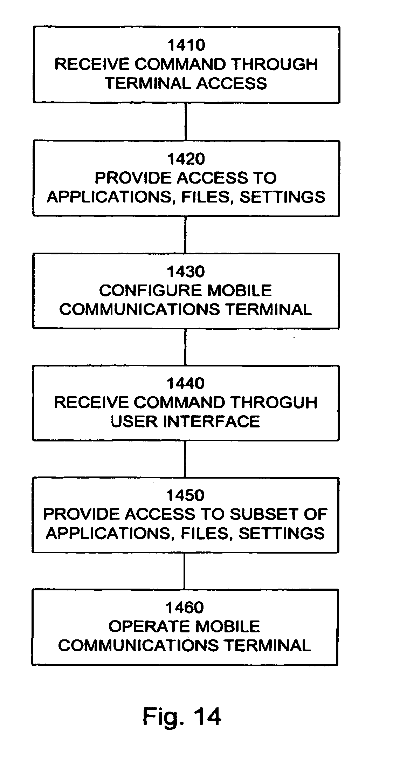

Figure 14 shows a flowchart for a method to be executed on a mobile communications terminal (200), such as the one which has been described with reference to figures 1 or 2, according to an embodiment disclosed herein. A mobile communications terminal (200) receives 1410 a command through a terminal access and provides access 1420 to applications, files and settings stored on the mobile communications terminal (200). The mobile communications terminal (200) is updated and configured 1430 according to the command. The mobile communications terminal (200) receives 1440 a command through a user interface and provides 1450 access to a subset of the applications, files and settings stored on the mobile communications terminal (200), and operates 1460 the mobile communications terminal (200) accordingly.

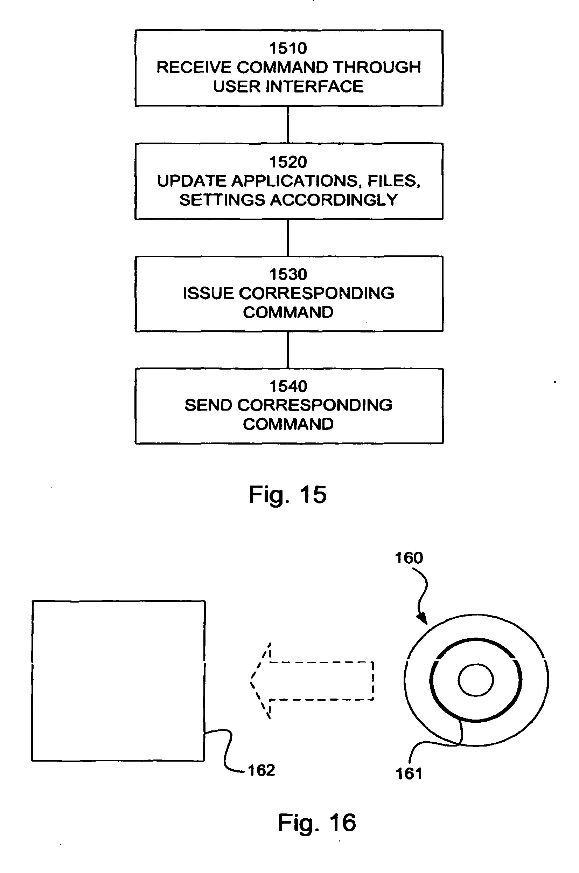

Figure 15 shows a flowchart for a method to be executed on a communications terminal (400), such as the one which has been described with reference to figures 3 or 4, according to an embodiment disclosed herein. A communications terminal (400) receives 1510 a command through a user interface and updates 1520 applications, files and/or settings for a mobile communications terminal (200) according to the command. The communications terminal (400) issues 1530 a corresponding command and sends 1540 the corresponding command through a device communication interface to the mobile communications terminal (200) for configuring the mobile communications terminal (200) accordingly.

It should be noted that even though the communications terminal (400) has been described above as to store applications, files and settings in a memory (440) of the terminal (400), the memory is, in one embodiment, configured to store links to such applications, files and/or settings. This allows for a reduced memory consumption as the whole applications, files and settings do not need to be stored in two places.

A system having a two-level interface according to the teachings herein is, in one embodiment, implemented through a software model having two layers. The first key component of the technical architecture is JBoss Application Server. In one embodiment the JEE application server is chosen for its performance, reputation and stability. Besides the fact that it is "full java", it provides a complete administration interface to easily manage clustering, load balancing. It includes a built-in transactional engine that allows for ensuring that all primary treatments do follow the rule ACID (atomicity, consistency, isolation, durability). It manages the deployment of applications with hot continuity. It allows the isolation of different applications in different instances of the server (stability, security, ...). The second key component of the technical architecture is based on a set of CORBA services: Corba Core Technology. Indeed, in most architecture, the major risk is usually at the level of data access. These treatments must be highly available, have a linear and acceptable response time, be able to pick up on errors and will be distributed on n-machines depending on the load and it considered the most transparent manner possible. From the design of the platform the CORBA ISNEXTG is integrated from society. In addition, these services have a system event logging function that allows simple implementation of operating modules and/or statistical tools.

The two-level user interface according to the teachings of this application is aimed at solving two different needs: Homecare professionals who has the need for coordination at senior's places (leave a screen at home with professional access); and Seniors who are equipped with mobile phones and interested in other services like Internet services, but are intimidated by the complexity of learning such new services with all the possibilities they offer, and who are in a need for easy-to-use solutions.

In one embodiment the two-level interface is configured to not allow a user to access any of the communication specific settings of the device through the first user interface, the simplified user interface. The two-level interface is configured to only allow a user to access a subset of the applications of the device through the first user interface, while allowing full access through the second (remote) user interface. A two-level interface such as above is further inventive in that it hides the mobile communications terminal's functionality to the user and makes it impossible to access those features from the device's user interface which in practice limits the device, but in a manner that empowers the usability of the device thereby making it suitable for users such as described above.

Thus, the two-level user interface is configured to present a limited number of relevant applications (adapted to the user), individualize a personal set of services, remotely manage the desktop from a web interface, allow evolution of the set of services in real-time, push information and data to reinforce the link between generations (photos, events, calendars...), be an open solution, facilitate synchronization between tablet computers and smartphones and computers and launch the simplified user interface desktop.

Another benefit of the teachings herein is that a mobile communications terminal is arranged to be simple to use, while still offering the advanced functionality of contemporary mobile communications terminals.

References to 'computer-readable storage medium', 'computer program product', 'tangibly embodied computer program' etc. or a 'controller', 'computer', 'processor' etc. should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

Figure 16 shows a schematic view of a computer-readable medium as described in the above. The computer-readable medium 160 is in this embodiment a CD (Compact Disc) or a DVD (Digital Video Disc). The CD 160 comprises instructions 161 that when loaded into a controller such as a processor executes a method or procedure according to the embodiments disclosed above. The CD 160 is arranged to be read by a reading device 162 for loading the instructions into the controller. It should be noted that a computer-readable medium can also be other mediums such as memory sticks, flash drives, hard drives or other memory technologies commonly used.

The teachings herein have mainly been described above with reference to a few embodiments. However, as is readily appreciated by a person skilled in the art, other embodiments than the ones disclosed above are equally possible within the scope of the invention, as defined by the appended patent claims.

## Claims

1. A mobile communications terminal (200) comprising a memory (240) and a controller (210), wherein said memory (240) is configured to store a plurality of applications, files and settings, and wherein said controller (210) is configured to:
receive a command originating from a remote user interface through a device communication interface (730, 830) for configuring the mobile communications terminal (200);
provide access to the plurality of applications, files and settings for the command received through the device communication interface (730, 830);
receive a command through a user interface (720, 820) for operating the mobile communications terminal (200); and
provide access to a subset of the plurality of applications, files and settings for the command received through the user interface (720, 820) and prevent access to the remainder of the plurality of applications, files and settings, thereby providing a simplified user interface for the mobile communications terminal, which simplified user interface is adapted to only offer an access to a subset of functions and applications while preventing access to adjust settings for the mobile communications terminal and that is configurable through a remote user interface, wherein the simplified user interface hides some of the mobile communications terminal's functionality from a user making it impossible for the user to access such functionality directly from the mobile communications terminal's simplified user interface, thereby limiting the functionality of the mobile communications terminal, and
said access provided to the plurality of settings for the command received through the device communication interface (730, 830) allows for configuring a layout design of said user interface (720, 820) through associating an application with an icon that is to be displayed and through a selection of the subset of applications, whereby a user interface for the simplified user interface, which is adapted to the needs of a technically inapt user for ease of use and for protecting against involuntary misconfiguration, is provided.

2. The mobile communications terminal (200) of claim 1, wherein said access provided to the subset of the plurality of applications, files and settings for the command received through the user interface (720, 820) includes executing access to the subset of applications, and,
wherein said command received through said simplified user interface (720, 820) is associated with executing an application and wherein said controller (210) is further configured to execute the application.

3. The mobile communications terminal (200) according to claim 1 or 2, wherein said access provided to the plurality of applications, files and settings for the command received through the device communication interface (730, 830) allows for adding an application to or removing an application from the subset of the plurality of applications, files and settings, while preventing executing access to the subset of applications.

4. The mobile communications terminal (200) according to any of claims 1 to 3, wherein said access provided to the plurality of applications, files and settings for the command received through the device communication interface (730, 830) excludes operative access to the plurality of applications and to functions of the mobile communications terminal (200).

5. The mobile communications terminal (200) according to any of claims 1 to 4, wherein said access provided to the plurality of files for the command received through the device communication interface (730, 830) allows for adding a file to the subset of files.

6. The mobile communications terminal (200) according to claim 5,
wherein said controller (210) is configured to receive a file through the device communication interface (730, 830) and in response thereto store the file in the memory (240) and present the file through the user interface (720, 820).

7. The mobile communications terminal (200) according to claims 5 or 6,
wherein said controller (210) is configured to receive a command through the user interface (720, 820) to create a file and in response thereto create the file, store the file in the memory (240) and send the file through the device communication interface (730, 830) for storing through said remote user interface.

8. The mobile communications terminal (200) according to claims 6 and/or 7, wherein said file is a media file, whereby said mobile communications terminal (200) is arranged to share media content with a remote user interface.

9. The mobile communications terminal (200) according to claims 5 or 6,
wherein said device communication interface (730, 830) is a radio frequency interface (430) for receiving commands from a remote user interface through a radio frequency connection.

10. A method for use in a mobile communications terminal (200) comprising a memory (240) configured to store a plurality of applications, files and settings, said method comprising:
receiving a command originating from a remote user interface through a device communication interface (730, 830) for configuring the mobile communications terminal (200);
providing access to the plurality of applications, files and settings for the command received through the device communication interface (730, 830);
receiving a command through a user interface (720, 820) for operating the mobile communications terminal (200); and
providing access to a subset of the plurality of applications, files and settings for the command received through the user interface (720, 820) and preventing access to the remainder of the plurality of applications, files and settings, thereby providing a simplified user interface for the mobile communications terminal, which simplified user interface is adapted to only offer an access to a subset of functions and applications while preventing access to adjust settings for the mobile communications terminal and that is configurable through a remote user interface, wherein the simplified user interface hides some of the mobile communications terminal's functionality from a user making it impossible for the user to access such functionality directly from the mobile communications terminal's simplified user interface, thereby limiting the functionality of the mobile communications terminal, and
said access provided to the plurality of settings for the command received through the device communication interface (730, 830) allows for configuring a layout design of said user interface (720, 820) through associating an application with an icon that is to be displayed and through a selection of the subset of applications, whereby a user interface for the simplified user interface, which is adapted to the needs of a technically inapt user for ease of use and for protecting against involuntary misconfiguration, is provided.

11. A method for use in a system comprising a mobile communications terminal (200) and a communications terminal (400) comprising a memory (440) configured to store a plurality of applications, files and settings and/or links to such applications, files and settings, said method comprising:
said communications terminal (400) receiving a command through a user interface (420) for configuring said mobile communications terminal (200);
updating the plurality of applications or settings according to the command; and
issuing a corresponding command and sending the corresponding command to the mobile communications terminal (200) for configuring the mobile communications terminal (200) accordingly, thereby providing a remote user interface for the mobile communications terminal (200),
said mobile communications terminal (200) receiving said corresponding command and
providing access to a subset of the plurality of applications, files and settings for the command received through the user interface (720, 820) and preventing access to the remainder of the plurality of applications, files and settings, thereby providing a simplified user interface for the mobile communications terminal, which simplified user interface is adapted to only offer an access to a subset of functions and applications while preventing access to adjust settings for the mobile communications terminal and that is configurable through a remote user interface, wherein the simplified user interface hides some of the mobile communications terminal's functionality from a user making it impossible for the user to access such functionality directly from the mobile communications terminal's simplified user interface, thereby limiting the functionality of the mobile communications terminal, and
said access provided to the plurality of settings for the command received through the device communication interface (730, 830) allows for configuring a layout design of said user interface (720, 820) through associating an application with an icon that is to be displayed and through a selection of the subset of applications, whereby a user interface for the simplified user interface, which is adapted to the needs of a technically inapt user for ease of use and for protecting against involuntary misconfiguration, is provided.

12. A system comprising a mobile communications terminal (200) and a communications terminal (400) comprising a memory (440) configured to store a plurality of applications, files and settings and/or links to such applications, files and settings,
said communications terminal (400) being configured to:
receive a command through a user interface (420) for configuring said mobile communications terminal (200);
update the plurality of applications or settings according to the command; and
issue a corresponding command and send the corresponding command to the mobile communications terminal (200) for configuring the mobile communications terminal (200) accordingly, thereby providing a remote user interface for the mobile communications terminal (200), wherein the mobile communications terminal (200) is configured to
receive said corresponding command and
provide access to a subset of the plurality of applications, files and settings for the command received through the user interface (720, 820) and prevent access to the remainder of the plurality of applications, files and settings, thereby providing a simplified user interface for the mobile communications terminal, which simplified user interface is adapted to only offer an access to a subset of functions and applications while preventing access to adjust settings for the mobile communications terminal and that is configurable through a remote user interface, wherein the simplified user interface hides some of the mobile communications terminal's functionality from a user making it impossible for the user to access such functionality directly from the mobile communications terminal's simplified user interface, thereby limiting the functionality of the mobile communications terminal, and
said access provided to the plurality of settings for the command received through the device communication interface (730, 830) allows for configuring a layout design of said user interface (720, 820) through associating an application with an icon that is to be displayed and through a selection of the subset of applications, whereby a user interface for the simplified user interface, which is adapted to the needs of a technically inapt user for ease of use and for protecting against involuntary misconfiguration, is provided.

13. A system according to claim 12 wherein said mobile communications terminal and said communications terminal is the same communications terminal (200).

14. A communications terminal (400) comprising a memory (440) configured to store a plurality of applications, files and settings and/or links to such applications, files and settings, and a controller (410), said controller (410) being configured to:
receive a command through a user interface (420) for configuring a mobile communications terminal (200);
update the plurality of applications or settings according to the command; and
issue a corresponding command and sending the corresponding command to the mobile communications terminal (200) for configuring the mobile communications terminal (200) accordingly, thereby providing a remote user interface for the mobile communications terminal (200),
wherein said corresponding command comprises settings for
providing access to a subset of the plurality of applications, files and settings for the command received through the user interface (720, 820) and preventing access to the remainder of the plurality of applications, files and settings, thereby providing a simplified user interface for the mobile communications terminal (200), which simplified user interface is adapted to only offer an access to a subset of functions and applications while preventing access to adjust settings for the mobile communications terminal and that is configurable through said user interface (420), wherein the simplified user interface hides some of the mobile communications terminal's functionality from a user making it impossible for the user to access such functionality directly from the mobile communications terminal's simplified user interface, thereby limiting the functionality of the mobile communications terminal, and
said access provided to the plurality of settings comprised in the corresponding command allows for configuring a layout design of said simplified user interface through associating an application with an icon that is to be displayed and through a selection of the subset of applications, whereby a user interface for the simplified user interface, which is adapted to the needs of a technically inapt user for ease of use and for protecting against involuntary misconfiguration, is provided.

15. A method for use in a communications terminal (400) comprising a memory (440) configured to store a plurality of applications, files and settings and/or links to such applications, files and settings, said method comprising:
receiving a command through a user interface (420) for configuring a mobile communications terminal (200);
updating the plurality of applications or settings according to the command; and
issuing a corresponding command and sending the corresponding command to the mobile communications terminal (200) for configuring the mobile communications terminal (200) accordingly, thereby providing a remote user interface for the mobile communications terminal (200),
wherein said corresponding command comprises settings for
providing access to a subset of the plurality of applications, files and settings for the command received through the user interface (720, 820) and preventing access to the remainder of the plurality of applications, files and settings, thereby providing a simplified user interface for the mobile communications terminal (200), which simplified user interface is adapted to only offer an access to a subset of functions and applications while preventing access to adjust settings for the mobile communications terminal and that is configurable through said user interface (420), wherein the simplified user interface hides some of the mobile communications terminal's functionality from a user making it impossible for the user to access such functionality directly from the mobile communications terminal's simplified user interface, thereby limiting the functionality of the mobile communications terminal, and
said access provided to the plurality of settings comprised in the corresponding command allows for configuring a layout design of said simplified user interface through associating an application with an icon that is to be displayed and through a selection of the subset of applications, whereby a user interface for the simplified user interface, which is adapted to the needs of a technically inapt user for ease of use and for protecting against involuntary misconfiguration, is provided.

16. A computer-readable storage medium (160) encoded with instructions (161) that, when executed on a processor, perform the method according to claim 10, 11 or 15.

## Patentansprüche

1. Mobilkommunikationsendgerät (200), das einen Speicher (240) und eine Steuervorrichtung (210) aufweist, wobei der Speicher (240) konfiguriert ist, um eine Mehrzahl von Anwendungen, Dateien und Einstellungen zu speichern, und wobei die Steuervorrichtung (210) konfiguriert ist, um:
einen Befehl, der von einer entfernten Benutzeroberfläche stammt, durch eine Gerätkommunikationsschnittstelle (730, 830) zum Konfigurieren des Mobilkommunikationsendgeräts (200) zu empfangen,
Zugang zu der Mehrzahl von Anwendungen, Daten und Einstellungen für den Befehl, der durch die Gerätkommunikationsschnittstelle (730, 830) empfangen wird, bereitzustellen,
einen Befehl durch eine Benutzeroberfläche (720, 820) zum Betreiben des Mobilkommunikationsendgeräts (200) zu empfangen, und
Zugang zu einem Untersatz der Mehrzahl von Anwendungen, Dateien und Einstellungen für den Befehl, der durch die Benutzeroberfläche (720, 820) empfangen wird, bereitzustellen und Zugang zu dem Rest der Mehrzahl von Anwendungen, Dateien und Einstellungen zu verhindern, so dass eine vereinfachte Benutzeroberfläche für das Mobilkommunikationsendgerät bereitgestellt wird, wobei die vereinfachte Benutzeroberfläche angepasst ist, um Zugang nur zu einem Untersatz von Funktionen und Anwendungen zu bieten, während Zugang zum Anpassen von Einstellungen für das Mobilkommunikationsendgerät verhindert wird, und das durch eine entfernte Benutzeroberfläche konfigurierbar ist, wobei die vereinfachte Benutzeroberfläche etwas von der Funktionalität des Mobilkommunikationsendgeräts für einen Benutzer verbirgt, so dass es für den Benutzer unmöglich ist, auf eine solche Funktionalität direkt von der vereinfachten Benutzeroberfläche des Mobilkommunikationsendgeräts zuzugreifen, wodurch die Funktionalität des Mobilkommunikationsendgeräts eingeschränkt wird, und
wobei der Zugang, der zu der Mehrzahl von Einstellungen für den Befehl, der durch die Gerätkommunikationsschnittstelle (730, 830) empfangen wird, bereitgestellt wird, das Konfigurieren eines Layoutdesigns der Benutzeroberfläche (720, 820) durch Verbinden einer Anwendung mit einem Symbol, das angezeigt werden soll, und durch eine Auswahl des Untersatzes von Anwendungen erlaubt, wodurch eine Benutzeroberfläche für die vereinfachte Benutzeroberfläche bereitgestellt wird, die an die Erfordernisse eines technisch ungebildeten Benutzers zur Erleichterung des Gebrauchs und zum Schützen vor unbeabsichtigter Fehlkonfiguration angepasst ist.

2. Mobilkommunikationsendgerät (200) nach Anspruch 1, wobei der Zugang, der zu dem Untersatz der Mehrzahl von Anwendungen, Dateien und Einstellungen für den Befehl, der durch die Benutzeroberfläche (720, 820) empfangen wird, bereitgestellt wird, das Ausführen von Zugang zu dem Untersatz der Anwendungen aufweist, und
wobei der Befehl, der durch die vereinfachte Benutzeroberfläche (720, 820) empfangen wird, mit dem Ausführen einer Anwendung verbunden ist, und wobei die Steuervorrichtung (210) ferner konfiguriert ist, um die Anwendung auszuführen.

3. Mobilkommunikationsendgerät (200) nach Anspruch 1 oder 2, wobei der Zugang, der zu der Mehrzahl von Anwendungen, Dateien und Einstellungen für den Befehl, der durch das Gerätkommunikationssystem (730, 830) empfangen wird, bereitgestellt wird, das Hinzufügen einer Anwendung zu oder Entfernen einer Anwendung von dem Untersatz der Mehrzahl von Anwendungen, Dateien und Einstellungen erlaubt, während das Ausführen von Zugang zu dem Untersatz von Anwendungen verhindert wird.

4. Mobilkommunikationsendgerät (200) nach einem der Ansprüche 1 bis 3, wobei der Zugang, der zu der Mehrzahl von Anwendungen, Dateien und Einstellungen für den Befehl, der durch die Gerätkommunikationsschnittstelle (730, 830) empfangen wird, bereitgestellt wird, operativen Zugang zu der Mehrzahl von Anwendungen und zu Funktionen des Mobilkommunikationsendgeräts (200) ausschließt.

5. Mobilkommunikationsendgerät (200) nach einem der Ansprüche 1 bis 4, wobei der Zugang, der zu der Mehrzahl von Dateien für den Befehl, der durch die Gerätkommunikationsschnittstelle (730, 830) empfangen wird, bereitgestellt wird, das Hinzufügen einer Datei zu dem Untersatz von Dateien erlaubt.

6. Mobilkommunikationsendgerät (200) nach Anspruch 5,
wobei die Steuervorrichtung (210) konfiguriert ist, um eine Datei durch die Gerätkommunikationsschnittstelle (730, 830) zu empfangen und als Reaktion darauf die Datei in dem Speicher (240) zu speichern und die Datei durch die Benutzeroberfläche (720, 820) zu präsentieren.

7. Mobilkommunikationsendgerät (200) nach Anspruch 5 oder 6,
wobei die Steuervorrichtung (210) konfiguriert ist, um einen Befehl durch die Benutzeroberfläche (720, 820) zu empfangen, um eine Datei anzulegen und als Reaktion darauf die Datei anzulegen, die Datei in dem Speicher (240) zu speichern und die Datei durch die Gerätkommunikationsschnittstelle (730, 830) zum Speichern durch die entfernte Benutzeroberfläche zu senden.

8. Mobilkommunikationsendgerät (200) nach den Ansprüchen 6 und/oder 7, wobei die Datei eine Mediendatei ist, wobei das Mobilkommunikationsendgerät (200) eingerichtet ist, um Medieninhalt mit einer entfernten Benutzeroberfläche zu teilen.

9. Mobilkommunikationsendgerät (200) nach Anspruch 5 oder 6, wobei die Gerätkommunikationsschnittstelle (730, 830) eine Funkschnittstelle (430) zum Empfangen von Befehlen von einer entfernten Benutzeroberfläche durch eine Funkverbindung ist.

10. Verfahren für den Gebrauch in einem Mobilkommunikationsendgerät (200), das einen Speicher (240) umfasst, der konfiguriert ist, um eine Mehrzahl von Anwendungen, Dateien und Einstellungen zu speichern, wobei das Verfahren Folgendes aufweist:
Empfangen eines Befehls, der von einer entfernten Benutzeroberfläche stammt, durch eine Gerätkommunikationsschnittstelle (730, 830) zum Konfigurieren des Mobilkommunikationsendgeräts (200),
Bereitstellen von Zugang zu der Mehrzahl von Anwendungen, Dateien und Einstellungen für den Befehl, der durch die Gerätkommunikationsschnittstelle (730, 830) empfangen wird,
Empfangen eines Befehls durch eine Benutzeroberfläche (720, 820) zum Betreiben des Mobilkommunikationsendgeräts (200), und
Bereitstellen von Zugang zu einem Untersatz der Mehrzahl von Anwendungen, Dateien und Einstellungen für den Befehl, der durch die Benutzeroberfläche (720, 820) empfangen wird, und Verhindern des Zugangs zu dem Rest der Mehrzahl von Anwendungen, Dateien und Einstellungen, so dass eine vereinfachte Benutzeroberfläche für das Mobilkommunikationsendgerät bereitgestellt wird, wobei die vereinfachte Benutzeroberfläche angepasst ist, um Zugang nur zu einem Untersatz von Funktionen und Anwendungen zu bieten, während Zugang zum Anpassen von Einstellungen für das Mobilkommunikationsendgerät verhindert wird, und das durch eine entfernte Benutzeroberfläche konfigurierbar ist, wobei die vereinfachte Benutzeroberfläche etwas der Funktionalität des Mobilkommunikationsendgeräts für einen Benutzer verbirgt, so dass es für den Benutzer unmöglich ist, auf eine solche Funktionalität direkt von der vereinfachten Benutzeroberfläche des Mobilkommunikationsendgeräts zuzugreifen, so dass die Funktionalität des Mobilkommunikationsendgeräts eingeschränkt ist, und
wobei der Zugang, der zu der Mehrzahl von Einstellungen für den Befehl, der durch die Gerätkommunikationsschnittstelle (730, 830) bereitgestellt wird, das Konfigurieren eines Layoutdesigns der Benutzeroberfläche (720, 820) durch Verbinden einer Anwendung mit einem Symbol, das anzuzeigen ist, und durch eine Auswahl des Untersatzes von Anwendungen erlaubt, wobei eine Benutzeroberfläche für die vereinfachte Benutzeroberfläche, die an die Erfordernisse des technisch ungebildeten Benutzers zur Erleichterung des Gebrauchs und zum Schützen vor unbeabsichtigter Fehlkonfiguration bereitgestellt ist.

11. Verfahren für den Gebrauch in einem System, das eine Mobilkommunikationsendgerät (200) und ein Kommunikationsendgerät (400) umfasst, das einen Speicher (440) umfasst, der konfiguriert ist, um eine Mehrzahl von Anwendungen, Dateien und Einstellungen und/oder Links zu solchen Anwendungen, Dateien und Einstellungen zu speichern, wobei das Verfahren Folgendes aufweist:
Empfangen eines Befehls durch eine Benutzeroberfläche (420) an dem Kommunikationsendgerät (400) zum Konfigurieren des Mobilkommunikationsendgeräts (200),
Aktualisieren der Mehrzahl von Anwendungen oder Einstellungen gemäß den Befehl, und
Ausgabe eines entsprechenden Befehls und Senden des entsprechenden Befehls zu dem Mobilkommunikationsendgerät (200) zum entsprechenden Konfigurieren des Mobilkommunikationsendgeräts 200, wodurch eine Benutzeroberfläche für das Mobilkommunikationsendgerät (200) bereitgestellt wird,
Empfangen des entsprechenden Befehls durch das Mobilkommunikationsendgerät (200), und
Bereitstellen von Zugang zu einem Untersatz der Mehrzahl von Anwendungen, Dateien und Einstellungen für den Befehl, der durch die Benutzeroberfläche (720, 820) empfangen wird und Verhindern des Zugangs zu dem Rest der Mehrzahl von Anwendungen, Dateien und Einstellungen, wodurch eine vereinfachte Benutzerschnittstelle für das Mobilkommunikationsendgerät bereitgestellt wird, wobei die vereinfachte Benutzeroberfläche angepasst ist, um Zugang nur zu einem Untersatz von Funktionen und
Anwendungen bereitzustellen, während Zugang zum Anpassen von Einstellungen für das Mobilkommunikationsendgerät verhindert wird, und das durch eine entfernte Benutzeroberfläche konfigurierbar ist, wobei die vereinfachte Benutzeroberfläche etwas der Funktionalität des Mobilkommunikationsendgeräts für einen Benutzer verbirgt, was es für den Benutzer unmöglich macht, auf eine solche Funktionalität direkt von der vereinfachten Benutzeroberfläche des Mobilkommunikationsendgeräts zuzugreifen, wodurch die Funktionalität des Mobilkommunikationsendgeräts eingeschränkt wird, und
wobei Zugang zu der Mehrzahl von Einstellungen für den Befehl, der durch die Gerätkommunikationsschnittstelle (730, 830) empfangen wird, das Konfigurieren eines Layoutdesigns der Benutzeroberfläche (720, 820) durch Verbinden einer Anwendung mit einem Symbol, das anzuzeigen ist, und durch eine Auswahl des Untersatzes von Anwendungen erlaubt, wobei eine Benutzeroberfläche für die vereinfachte Benutzeroberfläche, die an die Erfordernisse eines technisch ungebildeten Benutzers zum Erleichtern des Gebrauchs und zum Schützen vor unbeabsichtigter Fehlkonfiguration bereitgestellt wird.

12. System, das ein Mobilkommunikationsendgerät (200) und ein Kommunikationsendgerät (400) umfasst, das einen Speicher (440) umfasst, der konfiguriert ist, um eine Mehrzahl von Anwendungen, Dateien und Einstellungen und/oder Links zu solchen Anwendungen, Dateien und Einstellungen zu speichern,
wobei das Kommunikationsendgerät (400) konfiguriert ist, um:
einen Befehl durch eine Benutzeroberfläche (420) (200) zu empfangen,
die Mehrzahl von Anwendungen oder Einstellungen gemäß dem Befehl zu aktualisieren, und
einen entsprechenden Befehl auszugeben und den entsprechenden Befehl zu dem Mobilkommunikationsendgerät (200) zum entsprechenden Konfigurieren des Mobilkommunikationsendgeräts (200) zu senden, so dass eine entfernte Benutzeroberfläche für das Mobilkommunikationsendgerät (200) bereitgestellt wird, während das Mobilkommunikationsendgerät (200) konfiguriert ist, um
den entsprechenden Befehl zu empfangen und
Zugang zu einem Untersatz der Mehrzahl von Anwendungen, Dateien und Einstellungen für den Befehl, der durch die Benutzeroberfläche (720, 820) empfangen wird, bereitzustellen, und Zugang zu dem Rest der Mehrzahl von Anwendungen, Dateien und Einstellungen zu verhindern, so dass eine vereinfachte Benutzeroberfläche für das Mobilkommunikationsendgerät bereitgestellt wird, wobei die vereinfachte Benutzeroberfläche angepasst ist, um Zugang nur zu einem Untersatz von Funktionen und Anwendungen zu bieten, während Zugang zum Anpassen der Einstellungen des Mobilkommunikationsendgeräts verhindert wird, und das durch eine entfernte Benutzeroberfläche konfigurierbar ist, wobei die vereinfachte Benutzeroberfläche etwas von der Funktionalität des Mobilkommunikationsendgeräts für einen Benutzer verbirgt, was es für den Benutzer unmöglich macht, auf solche Funktionalität direkt von der vereinfachten Benutzeroberfläche des Mobilkommunikationsendgeräts zuzugreifen, so dass die Funktionalität des Mobilkommunikationsendgeräts eingeschränkt wird, und
wobei der Zugang, der zu der Mehrzahl von Einstellungen für den Befehl, der durch die Gerätkommunikationsschnittstelle (730, 830) empfangen wird, bereitgestellt wird, das Konfigurieren eines Layoutdesigns der Benutzeroberfläche (720, 820) durch Verbinden einer Anwendung mit einem Symbol, das anzuzeigen ist, und durch eine Auswahl des Untersatzes von Anwendungen erlaubt, wobei eine Benutzeroberfläche für die vereinfachte Benutzeroberfläche, die an die Erfordernisse eines technisch ungebildeten Benutzers angepasst ist, zur Erleichterung des Gebrauchs und zum Schützen vor unabsichtlicher Fehlkonfiguration bereitgestellt wird.

13. System nach Anspruch 12, wobei das Mobilkommunikationsendgerät und das Kommunikationsendgerät dasselbe Kommunikationsgerät (200) ist.

14. Kommunikationsendgerät (400), das einen Speicher (440) aufweist, der konfiguriert ist, um eine Mehrzahl von Anwendungen, Dateien und Einstellungen und/oder Links zu solchen Anwendungen, Dateien und Einstellungen zu speichern, und eine Steuervorrichtung (410), wobei die Steuervorrichtung (410) konfiguriert ist, um:
einen Befehl durch eine Benutzeroberfläche (420) zum Konfigurieren eines Mobilkommunikationsendgeräts (200) zu empfangen,
die Mehrzahl von Anwendungen oder Einstellungen gemäß dem Befehl zu aktualisieren, und
einen entsprechenden Befehl auszugeben und den entsprechenden Befehl zu dem Mobilkommunikationsendgerät (200) zum entsprechenden Konfigurieren des Mobilkommunikationsendgeräts (200) zu senden, so dass eine entfernte Benutzeroberfläche für das Mobilkommunikationsendgerät (200) bereitgestellt wird,
wobei der entsprechende Befehl Einstellungen umfasst, um
Zugang zu einem Untersatz der Mehrzahl von Anwendungen, Dateien und Einstellungen für den Befehle, der durch die Benutzeroberfläche (720, 820) empfangen wird, bereitzustellen, und Zugang zu dem Rest der Mehrzahl von Anwendungen, Dateien und Einstellungen zu verhindern, so dass eine vereinfachte Benutzeroberfläche für das Mobilkommunikationsendgerät (200) bereitgestellt wird, wobei die vereinfachte Benutzeroberfläche angepasst ist, um Zugang nur zu einem Untersatz von Funktionen und Anwendungen zu bieten, während Zugang zum Anpassen von Einstellungen für das Mobilkommunikationsendgerät verhindert wird, und das durch die Benutzeroberfläche (420) konfigurierbar ist, wobei die vereinfachte Benutzeroberfläche etwas von der Funktionalität des Mobilkommunikationsendgeräts für einen Benutzer verbirgt, was es für den Benutzer unmöglich macht, auf solche Funktionalität direkt von der vereinfachten Benutzeroberfläche des Mobilkommunikationsendgeräts zuzugreifen, so dass die Funktionalität des Mobilkommunikationsendgeräts eingeschränkt wird, und
wobei der Zugang, der zu der Mehrzahl von Einstellungen, die in dem entsprechenden Befehl enthalten sind, bereitgestellt wird, das Konfigurieren eines Layoutdesigns der vereinfachten Benutzeroberfläche durch Verbinden einer Anwendung mit einem Symbol, das anzuzeigen ist, und durch eine Auswahl des Untersatzes von Anwendungen erlaubt, so dass eine Benutzeroberfläche für die vereinfachte Benutzeroberfläche, die an die Erfordernisse eines technisch ungebildeten Benutzers angepasst ist, zum Erleichtern des Gebrauchs und zum Schützen vor unbeabsichtigter Fehlkonfiguration bereitgestellt wird.

15. Verfahren für den Gebrauch in einem Kommunikationsendgerät (400), das einen Speicher (440) umfasst, der konfiguriert ist, um eine Mehrzahl von Anwendungen, Dateien und Einstellungen und/oder Links zu solchen Anwendungen, Dateien und Einstellungen zu speichern, wobei das Verfahren Folgendes aufweist:
Empfangen eines Befehls durch eine Benutzeroberfläche (420) zum Konfigurieren eines Mobilkommunikationsendgeräts (200),
Aktualisieren der Mehrzahl von Anwendungen oder Einstellungen gemäß dem Befehl, und
Ausgeben eines entsprechenden Befehls und Senden des entsprechenden Befehls zu dem Mobilkommunikationsendgerät (200) zum entsprechenden Konfigurieren des Mobilkommunikationsendgeräts (200), so dass eine entfernte Benutzeroberfläche für das Mobilkommunikationsendgerät (200) bereitgestellt wird,
wobei der entsprechende Befehl Einstellungen umfasst, um
Zugang zu einem Untersatz der Mehrzahl von Anwendungen, Dateien und Einstellungen für den Befehl, der durch die Benutzeroberfläche (720, 820) empfangen wird, bereitzustellen, und Zugang zu dem Rest der Mehrzahl von Anwendungen, Dateien und Einstellungen zu verhindern, so dass eine vereinfachte Benutzeroberfläche für das Mobilkommunikationsendgerät (200) bereitgestellt wird, wobei die vereinfachte Benutzeroberfläche angepasst ist, um Zugang nur zu einem Untersatz von Funktionen und Anwendungen zu bieten, während Zugang zum Anpassen der Einstellungen des Mobilkommunikationsendgeräts verhindert wird, und das durch die Benutzeroberfläche (420) konfigurierbar ist, wobei die vereinfachte Benutzeroberfläche etwas von der Funktionalität des Mobilkommunikationsendgeräts für einen Benutzer verbirgt, so dass es für den Benutzer unmöglich ist, auf solche Funktionalität direkt von der vereinfachten Benutzeroberfläche des Mobilkommunikationsendgeräts zuzugreifen, so dass die Funktionalität des Mobilkommunikationsendgeräts eingeschränkt wird, und
wobei der Zugang, der zu der Mehrzahl von Einstellungen, die in dem entsprechenden Befehl enthalten ist, bereitgestellt wird, das Konfigurieren eines Layoutdesigns der vereinfachten Benutzeroberfläche durch Verbinden einer Anwendung mit einem Symbol, das anzuzeigen ist, und durch eine Auswahl des Untersatzes von Anwendungen erlaubt, so dass eine Benutzeroberfläche für vereinfachte Benutzeroberfläche, die an die Erfordernisse eines technisch ungebildeten Benutzers zur Erleichterung des Gebrauchs und zum Schützen vor unbeabsichtigter Fehlkonfiguration angepasst ist, bereitgestellt wird.

16. Computerlesbarer Speicherträger (160), der mit Anweisungen (161) codiert ist, die, wenn sie auf einem Prozessor ausgeführt werden, das Verfahren nach Anspruch 10, 11 oder 15 ausführen.

## Revendications

1. Terminal de communication mobile (200) comprenant une mémoire (240) et un contrôleur (210), dans lequel ladite mémoire (240) est configurée de manière à stocker une pluralité d'applications, de fichiers et de paramètres, et dans lequel ledit contrôleur (210) est configuré de manière à :
recevoir une commande, en provenance d'une interface utilisateur distante, par le biais d'une interface de communication de dispositif (730, 830), visant à configurer le terminal de communication mobile (200) ;
fournir un accès à la pluralité d'applications, de fichiers et de paramètres pour la commande reçue par le biais de l'interface de communication de dispositif (730, 830) ;
recevoir une commande, par le biais d'une interface utilisateur (720, 820), visant à exploiter le terminal de communication mobile (200) ; et
fournir un accès à un sous-ensemble de la pluralité d'applications, de fichiers et de paramètres pour la commande reçue par l'intermédiaire de l'interface utilisateur (720, 820), et empêcher l'accès au reste de la pluralité d'applications, de fichiers et de paramètres, ce qui permet de fournir par conséquent une interface utilisateur simplifiée pour le terminal de communication mobile, laquelle interface utilisateur simplifiée est apte à n'offrir un accès qu'à un sous-ensemble de fonctions et d'applications, tout en empêchant l'accès à des paramètres d'ajustement pour le terminal de communication mobile, et qui est configurable par le biais d'une interface utilisateur distante, dans lequel l'interface utilisateur simplifiée masque une partie de la fonctionnalité du terminal de communication mobile, relativement à un utilisateur, ce qui empêche l'utilisateur d'accéder à une telle fonctionnalité directement à partir de l'interface utilisateur simplifiée du terminal de communication mobile, ce qui limite par conséquent la fonctionnalité du terminal de communication mobile ; et
ledit accès fourni à la pluralité de paramètres pour la commande reçue par le biais de l'interface de communication de dispositif (730, 830) permet de configurer un schéma de configuration de ladite interface utilisateur (720, 820) à travers l'association d'une application à une icône qui doit être affichée, et à travers une sélection du sous-ensemble d'applications, moyennant quoi est fournie une interface utilisateur pour l'interface utilisateur simplifiée, laquelle est adaptée aux besoins d'un utilisateur techniquement inapte en termes de facilité d'utilisation et de protection contre les configurations inadéquates involontaires.

2. Terminal de communication mobile (200) selon la revendication 1, dans lequel ledit accès fourni au sous-ensemble de la pluralité d'applications, de fichiers et de paramètres pour la commande reçue par l'intermédiaire de l'interface utilisateur (720, 820) inclut la mise en oeuvre de l'accès au sous-ensemble d'applications ; et,
dans lequel ladite commande reçue par le biais de ladite interface utilisateur simplifiée (720, 820) est associée à l'exécution d'une application, et dans lequel ledit contrôleur (210) est en outre configuré de manière à exécuter l'application.

3. Terminal de communication mobile (200) selon la revendication 1 ou 2, dans lequel ledit accès fourni à la pluralité d'applications, de fichiers et de paramètres pour la commande reçue par le biais de l'interface de communication de dispositif (730, 830) permet l'ajout d'une application au sous-ensemble de la pluralité d'applications, de fichiers et de paramètres, ou la suppression d'une application dudit sous-ensemble, tout en empêchant la mise en oeuvre de l'accès au sous-ensemble d'applications.

4. Terminal de communication mobile (200) selon l'une quelconque des revendications 1 à 3, dans lequel ledit accès fourni à la pluralité d'applications, de fichiers et de paramètres pour la commande reçue par le biais de l'interface de communication de dispositif (730, 830) exclut un accès opérationnel à la pluralité d'applications et à des fonctions du terminal de communication mobile (200).

5. Terminal de communication mobile (200) selon l'une quelconque des revendications 1 à 4, dans lequel ledit accès fourni à la pluralité de fichiers pour la commande reçue par le biais de l'interface de communication de dispositif (730, 830) permet l'ajout d'un fichier au sous-ensemble de fichiers.

6. Terminal de communication mobile (200) selon la revendication 5, dans lequel ledit contrôleur (210) est configuré de manière à recevoir un fichier par le biais de l'interface de communication de dispositif (730, 830), et en réponse à cela, à stocker le fichier dans la mémoire (240) et à présenter le fichier par le biais de l'interface utilisateur (720, 820).

7. Terminal de communication mobile (200) selon la revendication 5 ou 6,
dans lequel ledit contrôleur (210) est configuré de manière à recevoir une commande par le biais de l'interface utilisateur (720, 820), visant à créer un fichier, et en réponse à cela, à créer le fichier, à stocker le fichier dans la mémoire (240) et à envoyer le fichier par le biais de l'interface de communication de dispositif (730, 830), en vue de son stockage par l'intermédiaire de ladite interface utilisateur distante.

8. Terminal de communication mobile (200) selon les revendications 6 et/ou 7, dans lequel ledit fichier est un fichier multimédia, moyennant quoi ledit terminal de communication mobile (200) est agencé de manière à partager du contenu multimédia avec une interface utilisateur distante.

9. Terminal de communication mobile (200) selon les revendications 5 ou 6, dans lequel ladite interface de communication de dispositif (730, 830) est une interface de fréquence radio (430) destinée à recevoir des commandes en provenance d'une interface utilisateur distante à travers une connexion de fréquence radio.

10. Procédé destiné à être utilisé dans un terminal de communication mobile (200) comprenant une mémoire (240) configurée de manière à stocker une pluralité d'applications, de fichiers et de paramètres, ledit procédé consistant à :
recevoir une commande, en provenance d'une interface utilisateur distante, par le biais d'une interface de communication de dispositif (730, 830), visant à configurer le terminal de communication mobile (200) ;
fournir un accès à la pluralité d'applications, de fichiers et de paramètres pour la commande reçue par le biais de l'interface de communication de dispositif (730, 830) ;
recevoir une commande, par le biais d'une interface utilisateur (720, 820), visant à exploiter le terminal de communication mobile (200) ; et
fournir un accès à un sous-ensemble de la pluralité d'applications, de fichiers et de paramètres pour la commande reçue par l'intermédiaire de l'interface utilisateur (720, 820), et empêcher l'accès au reste de la pluralité d'applications, de fichiers et de paramètres, ce qui permet de fournir par conséquent une interface utilisateur simplifiée pour le terminal de communication mobile, laquelle interface utilisateur simplifiée est apte à n'offrir un accès qu'à un sous-ensemble de fonctions et d'applications, tout en empêchant l'accès à des paramètres d'ajustement pour le terminal de communication mobile, et qui est configurable par le biais d'une interface utilisateur distante, dans lequel l'interface utilisateur simplifiée masque une partie de la fonctionnalité du terminal de communication mobile, relativement à un utilisateur, ce qui empêche l'utilisateur d'accéder à une telle fonctionnalité directement à partir de l'interface utilisateur simplifiée du terminal de communication mobile, ce qui limite par conséquent la fonctionnalité du terminal de communication mobile ; et
ledit accès fourni à la pluralité de paramètres pour la commande reçue par le biais de l'interface de communication de dispositif (730, 830) permet de configurer un schéma de configuration de ladite interface utilisateur (720, 820) à travers l'association d'une application à une icône qui doit être affichée, et à travers une sélection du sous-ensemble d'applications, moyennant quoi est fournie une interface utilisateur pour l'interface utilisateur simplifiée, laquelle est adaptée aux besoins d'un utilisateur techniquement inapte en termes de facilité d'utilisation et de protection contre les configurations inadéquates involontaires.

11. Procédé destiné à être utilisé dans un système comprenant un terminal de communication mobile (200) et un terminal de communication (400) comprenant une mémoire (440) configurée de manière à stocker une pluralité d'applications, de fichiers et de paramètres et/ou de liens à de telles applications et à de tels fichiers et paramètres, ledit procédé consistant à :
recevoir, sur le terminal de communication (400), une commande, par le biais d'une interface utilisateur (420), visant à configurer ledit terminal de communication mobile (200) ;
mettre à jour la pluralité d'applications ou de paramètres selon la commande ; et
émettre une commande correspondante et envoyer la commande correspondante au terminal de communication mobile (200), en vue de configurer le terminal de communication mobile (200) en conséquence, ce qui permet de fournir par conséquent une interface utilisateur distante pour le terminal de communication mobile (200) ;
recevoir, sur ledit terminal de communication mobile (200), ladite commande correspondante ; et
fournir un accès à un sous-ensemble de la pluralité d'applications, de fichiers et de paramètres pour la commande reçue par l'intermédiaire de l'interface utilisateur (720, 820), et empêcher l'accès au reste de la pluralité d'applications, de fichiers et de paramètres, ce qui permet de fournir par conséquent une interface utilisateur simplifiée pour le terminal de communication mobile, laquelle interface utilisateur simplifiée est apte à n'offrir un accès qu'à un sous-ensemble de fonctions et d'applications, tout en empêchant l'accès à des paramètres d'ajustement pour le terminal de communication mobile, et qui est configurable par le biais d'une interface utilisateur distante, dans lequel l'interface utilisateur simplifiée masque une partie de la fonctionnalité du terminal de communication mobile, relativement à un utilisateur, ce qui empêche l'utilisateur d'accéder à une telle fonctionnalité directement à partir de l'interface utilisateur simplifiée du terminal de communication mobile, ce qui limite par conséquent la fonctionnalité du terminal de communication mobile ; et
ledit accès fourni à la pluralité de paramètres pour la commande reçue par le biais de l'interface de communication de dispositif (730, 830) permet de configurer un schéma de configuration de ladite interface utilisateur (720, 820) à travers l'association d'une application à une icône qui doit être affichée, et à travers une sélection du sous-ensemble d'applications, moyennant quoi est fournie une interface utilisateur pour l'interface utilisateur simplifiée, laquelle est adaptée aux besoins d'un utilisateur techniquement inapte en termes de facilité d'utilisation et de protection contre les configurations inadéquates involontaires.

12. Système comprenant un terminal de communication mobile (200) et un terminal de communication (400) comprenant une mémoire (440) configurée de manière à stocker une pluralité d'applications, de fichiers et de paramètres et/ou de liens à de telles applications et à de tels fichiers et paramètres ;
ledit terminal de communication (400) étant configuré de manière à :
recevoir une commande, par le biais d'une interface utilisateur (420), visant à configurer ledit terminal de communication mobile (200) ;
mettre à jour la pluralité d'applications ou de paramètres selon la commande ; et
émettre une commande correspondante et envoyer la commande correspondante au terminal de communication mobile (200) en vue de configurer le terminal de communication mobile (200) en conséquence, ce qui permet de fournir par conséquent une interface utilisateur distante pour le terminal de communication mobile (200), dans lequel le terminal de communication mobile (200) est configuré de manière à :
recevoir ladite commande correspondante ; et
fournir un accès à un sous-ensemble de la pluralité d'applications, de fichiers et de paramètres pour la commande reçue par l'intermédiaire de l'interface utilisateur (720, 820), et empêcher l'accès au reste de la pluralité d'applications, de fichiers et de paramètres, ce qui permet de fournir par conséquent une interface utilisateur simplifiée pour le terminal de communication mobile, laquelle interface utilisateur simplifiée est apte à n'offrir un accès qu'à un sous-ensemble de fonctions et d'applications, tout en empêchant l'accès à des paramètres d'ajustement pour le terminal de communication mobile, et qui est configurable par le biais d'une interface utilisateur distante, dans lequel l'interface utilisateur simplifiée masque une partie de la fonctionnalité du terminal de communication mobile, relativement à un utilisateur, ce qui empêche l'utilisateur d'accéder à une telle fonctionnalité directement à partir de l'interface utilisateur simplifiée du terminal de communication mobile, ce qui limite par conséquent la fonctionnalité du terminal de communication mobile ; et
ledit accès fourni à la pluralité de paramètres pour la commande reçue par le biais de l'interface de communication de dispositif (730, 830) permet de configurer un schéma de configuration de ladite interface utilisateur (720, 820) à travers l'association d'une application à une icône qui doit être affichée, et à travers une sélection du sous-ensemble d'applications, moyennant quoi est fournie une interface utilisateur pour l'interface utilisateur simplifiée, laquelle est adaptée aux besoins d'un utilisateur techniquement inapte en termes de facilité d'utilisation et de protection contre les configurations inadéquates involontaires.

13. Système selon la revendication 12, dans lequel ledit terminal de communication mobile et ledit terminal de communication correspondent au même terminal de communication (200).

14. Terminal de communication (400) comprenant une mémoire (440) configurée de manière à stocker une pluralité d'applications, de fichiers et de paramètres et/ou de liens à de telles applications et à de tels fichiers et paramètres, et un contrôleur (410), ledit contrôleur (410) étant configuré de manière à :
recevoir une commande, par le biais d'une interface utilisateur (420), visant à configurer un terminal de communication mobile (200) ;
mettre à jour la pluralité d'applications ou de paramètres selon la commande ; et
émettre une commande correspondante et envoyer la commande correspondante au terminal de communication mobile (200) en vue de configurer le terminal de communication mobile (200) en conséquence, ce qui permet de fournir par conséquent une interface utilisateur distante pour le terminal de communication mobile (200) ;
dans lequel ladite commande correspondante comprend des paramètres pour :
fournir un accès à un sous-ensemble de la pluralité d'applications, de fichiers et de paramètres pour la commande reçue par l'intermédiaire de l'interface utilisateur (720, 820), et empêcher l'accès au reste de la pluralité d'applications, de fichiers et de paramètres, ce qui permet de fournir par conséquent une interface utilisateur simplifiée pour le terminal de communication mobile (200), laquelle interface utilisateur simplifiée est apte à n'offrir un accès qu'à un sous-ensemble de fonctions et d'applications, tout en empêchant l'accès à des paramètres d'ajustement pour le terminal de communication mobile, et qui est configurable par le biais de ladite interface utilisateur (420), dans lequel l'interface utilisateur simplifiée masque une partie de la fonctionnalité du terminal de communication mobile, relativement à un utilisateur, ce qui empêche l'utilisateur d'accéder à une telle fonctionnalité directement à partir de l'interface utilisateur simplifiée du terminal de communication mobile, ce qui limite par conséquent la fonctionnalité du terminal de communication mobile ; et
ledit accès fourni à la pluralité de paramètres inclus dans la commande correspondante permet de configurer un schéma de configuration de ladite interface utilisateur simplifiée à travers l'association d'une application à une icône qui doit être affichée, et à travers une sélection du sous-ensemble d'applications, moyennant quoi est fournie une interface utilisateur pour l'interface utilisateur simplifiée, laquelle est adaptée aux besoins d'un utilisateur techniquement inapte en termes de facilité d'utilisation et de protection contre les configurations inadéquates involontaires.

15. Procédé destiné à être utilisé dans un terminal de communication (400) comprenant une mémoire (440) configurée de manière à stocker une pluralité d'applications, de fichiers et de paramètres et/ou de liens à de telles applications et à de tels fichiers et paramètres, ledit procédé consistant à :
recevoir une commande, par le biais d'une interface utilisateur (420), visant à configurer un terminal de communication mobile (200) ;
mettre à jour la pluralité d'applications ou de paramètres selon la commande ; et
émettre une commande correspondante, et envoyer la commande correspondante au terminal de communication mobile (200) en vue de configurer le terminal de communication mobile (200) en conséquence, ce qui permet de fournir par conséquent une interface utilisateur distante pour le terminal de communication mobile (200) ;
dans lequel ladite commande correspondante comprend des paramètres pour :
fournir un accès à un sous-ensemble de la pluralité d'applications, de fichiers et de paramètres pour la commande reçue par l'intermédiaire de l'interface utilisateur (720, 820), et empêcher l'accès au reste de la pluralité d'applications, de fichiers et de paramètres, ce qui permet de fournir par conséquent une interface utilisateur simplifiée pour le terminal de communication mobile (200), laquelle interface utilisateur simplifiée est apte à n'offrir un accès qu'à un sous-ensemble de fonctions et d'applications, tout en empêchant l'accès à des paramètres d'ajustement pour le terminal de communication mobile, et qui est configurable par le biais de ladite interface utilisateur (420), dans lequel l'interface utilisateur simplifiée masque une partie de la fonctionnalité du terminal de communication mobile, relativement à un utilisateur, ce qui empêche l'utilisateur d'accéder à une telle fonctionnalité directement à partir de l'interface utilisateur simplifiée du terminal de communication mobile, ce qui limite par conséquent la fonctionnalité du terminal de communication mobile ; et
ledit accès fourni à la pluralité de paramètres inclus dans la commande correspondante permet de configurer un schéma de configuration de ladite interface utilisateur simplifiée à travers l'association d'une application à une icône qui doit être affichée, et à travers une sélection du sous-ensemble d'applications, moyennant quoi est fournie une interface utilisateur pour l'interface utilisateur simplifiée, laquelle est adaptée aux besoins d'un utilisateur techniquement inapte en termes de facilité d'utilisation et de protection contre les configurations inadéquates involontaires.

16. Support de stockage lisible par ordinateur (160) codé avec des instructions (161) qui, lorsqu'elles sont exécutées sur un processeur, mettent en oeuvre le procédé selon la revendication 10, 11 ou 15.
